# EUROPÄISCHE PATENTSCHRIFT

(11) **EP 2 795 142 B1**
(45) Veröffentlichungstag und Bekanntmachung des Hinweises auf die Patenterteilung: **02.03.2016**
(21) Anmeldenummer: 12846825.3
(22) Anmeldetag: 20.12.2012
(51) Int. Cl.: F16B 12/12, A47B 47/03, F16B 12/26, F16B 12/46, A47B 47/04, F16B 5/07

(54) **LEIMLOSER KORPUS**
GLUELESS CARCASE
CORPS SANS COLLE

(30) Priorität: 23.12.2011 DE 202011109931 U; 23.12.2011 DE 202011109923 U; 15.06.2012 DE 102012105219
(43) Veröffentlichungstag der Anmeldung: 29.10.2014
(73) Patentinhaber: Schulte, Guido, 59602 Rüthen-Meiste (DE)
(72) Erfinder: Schulte, Guido, 59602 Rüthen-Meiste (DE)
(74) Vertreter: Griepenstroh, Jörg
(86) Internationale Anmeldenummer: PCT/IB2012/003038
(87) Internationale Veröffentlichungsnummer: WO 2013/093636

(56) Entgegenhaltungen:
- EP-A1- 0 479 767
- EP-A1- 1 671 562
- US-A1- 2004 065 031
- US-A1- 2008 302 051

## Beschreibung

Die Erfindung betrifft einen leimlosen Korpus, insbesondere für ein Möbelstück, gemäß den Merkmalen im Oberbegriff von Patentanspruch 1 sowie ein Verfahren zum leimlosen Verbinden wenigstens zweier Wandelemente eines Korpus gemäß den Merkmalen von Patentanspruch 15.

Möbel bilden vorwiegend einen Teil der Innenraumgestaltung zumeist geschlossener Räume, innerhalb derer sie als Einrichtungsgegenstände dienen. Neben Sitzmöbeln und Tischen weisen insbesondere so genannte Behältnismöbel einen zunächst offenen Korpus auf, welcher bei Bedarf beispielsweise über eine Tür geschlossen werden kann.

Dabei bildet der Korpus das zumeist selbst tragende Basiselement eines solchen Möbelstücks, welcher als Grundkonstruktion aus einzelnen Wandelementen zusammengesetzt ist. Dabei umfassen die einzelnen Wandelemente sowohl die Seitenteile als beispielsweise auch den Boden und den Deckel. Um die zumeist instabile Form des Korpus zu stabilisieren, wird dieser rückseitig mit einer Rückwand versehen, welche in Form einer Scheibe die Lage der einzelnen Wandelemente zueinander festlegt.

Je nach Anforderung wird der Korpus entweder direkt auf eine Bodenfläche aufgestellt oder beispielsweise an einem Wandbereich festgelegt. Hierbei dient er zumeist der Aufbewahrung sowie Aufnahme von Gegenständen, wobei er beispielsweise über eine an ihm festgelegte Tür bei Bedarf geschlossen werden kann.

Im Stand der Technik ist es bekannt, die einzelnen Wandelemente beispielsweise verleimt oder zerlegbar zusammenzufügen. Dabei werden die Stirnseiten der Wandelemente über eine geeignete Klebeverbindung mit einem zumeist randseitigen Bereich der Seitenflächen weiterer Wandelemente verbunden. Dies erfolgt zumeist unter Verwendung von Holzdübeln. Weiterhin können die Stirnseiten in gleicher Weise auch über eine Gehrung verbunden werden.

Demgegenüber werden zerlegbare Konstruktionen derart realisiert, dass die einzelnen Wandelemente über Möbelverbinder miteinander gekoppelt sind. Neben im Innenbereich des Korpus zu verwendenden Verbindungsbeschlägen haben sich insbesondere unsichtbare Korpusverbinder etabliert. Diese weisen einen Schraubbolzen auf, welcher über sein Gewinde in eine Stirnseite oder Seitenfläche des jeweiligen Wandelements eingeschraubt wird. Ein gewindeloser Abschnitt des Schraubbolzens weist dabei einen Bolzenkopf auf, welcher mit einem flachzylindrischen Exzenterverbinder korrespondiert.

Der Exzenterverbinder ist drehbar in ein weiteres Wandelement eingelassen, wo er der Aufnahme des Bolzenkopfes dient. Hierfür muss in einen den Exzenterverbinder umgebenden Bereich des Wandelements eine dieses von seiner Stirnseite her durchsetzende Bohrung angeordnet werden, durch welche hindurch der Schraubbolzen eingeführt wird. Über eine entsprechende Ausnehmung sowie umlaufend angeordnete Rinne des Exzenterverbinders wird bei dessen Drehung der Bolzenkopf gegriffen, wodurch der Schraubbolzen mit samt des daran gekoppelten Wandelements gegen das den Exzenterverbinder tragende Wandelement verspannt wird.

Bei Bedarf kann diese Verbindung durch Drehen des Exzenterverbinders wieder gelöst werden, um den Korpus zu zerlegen.

Geleimte Verbindungen bieten eine überaus haltbare Möglichkeit, einzelne Wandelemente untereinander zu verbinden. Auf Grund der erforderlichen Anordnung von Holzdübeln zur Lagefixierung und Übertragung von Schubkräften sowie der unerlässlichen Trockenzeit benötigen derartige Verbindungen eine entsprechend lange Herstellungszeit. Weiterhin ist eine überaus sorgfältige Arbeitsweise notwendig, um neben einer haltbaren Verbindung nicht ungewollte Verunreinigungen der Sichtflächen des Korpus mit Kleber, beispielsweise mit Leim zu erhalten. Ferner muss der Korpus bei Bedarf zerstört werden, um diesen zu zerlegen.

Demgegenüber bietet die Verwendung von Möbelverbindern eine einfache Möglichkeit für die leimlose Herstellung eines solchen Korpus. Bei Bedarf kann dieser einfach über die lösbaren Verbindungsmittel zerlegt und beispielsweise an anderer Stelle wieder zusammengebaut werden. Gleichwohl stellen derartige Möbelverbinder entsprechende Anforderungen an die Konfektionierung der Wandelemente, was durch zusätzlichen Aufwand beim Montieren des Korpus ergänzt wird. Insbesondere die für den Zusammenbau notwendige Zeit treibt die zur Herstellung entstehenden Kosten in die Höhe. Insgesamt ist somit eine wirtschaftliche Herstellung von Möbelstücken nur schwer möglich. Hinzu kommt die Gefahr etwaiger überdrehter Verbindungsmittel, welche beispielsweise zu einem Ausbruch eines Innengewindes innerhalb eines Wandelements führt.

Die DE 20 2009 008 825 U1 offenbart eine Möglichkeit zur Zusammensetzung zweier paneelförmiger Elemente, welche über an ihren Stirnseiten angeordnete Kopplungsmittel miteinander verbindbar sind. Dabei umfasst eines der Elemente eine an der Stirnseite angeordnete Feder, welche mit einer in der gegenüberliegenden Stirnseite eines zu verbindenden Elementes angeordneten Nut korrespondiert.

Um eine sich selbst zu verriegelnde Verbindung zu schaffen, ist vorgesehen, die Feder über eine sich in deren Längsrichtung erstreckende Ausnehmung derart zu gestalten, dass zumindest ein Teilbereich der Feder elastisch beweglich ist. Der somit elastisch gestaltete Bereich der Feder weist zudem eine Kuppelleiste auf, welche im verbundenen Zustand der beiden Elemente in einen innerhalb der Nut angeordneten Kanal greift. Die somit gebildete Hinterschneidung verhindert, dass die beiden zusammengesteckten Elemente sich voneinander lösen.

Hierdurch wird eine leimlose Möbelplattenverbindung geschaffen, welche eine schnelle Montage der miteinander zu verbindenden Elemente ermöglicht. Ein etwaiges Lösen der Verbindung ist allerdings nur mit entsprechendem Aufwand möglich, wobei die Gefahr einer Zerstörung des federelastischen Teils der Feder nicht grundsätzlich zu verhindern ist. Weiterhin müssen die miteinander zu verbindenden Elemente mit entsprechendem Aufwand sowie Präzision gestaltet sein, um die notwendige Spannung zwischen den zu verbindenden Elementen herzustellen, wodurch erst eine möglichst spaltfreie Verbindung realisierbar ist. Hinzu kommt, dass die jeweiligen Stirnseiten unterschiedliche Verbindungsmittel aufweisen, so dass eine bestimmte Reihenfolge sowie eine notwendige Kopplung vorgegebener Elemente erfolgen muss. Weiterhin ist aus der US 2008/0302051 A1 ein leimloser Korpus für ein Möbelstück bekannt, bei dem einzelne Wandelemente über eine Schnappverbindung ineinander steckbar sind. Bei einem Ineinanderstecken zweier Wandelemente in einem Eckbereich ist somit ein erhöhter Kraftaufwand notwendig, um die Rastkraft der Schnappverbindung zu überwinden. Insbesondere bei einer Demontage kann weiterhin durch Herausziehen der Wandelemente aus der die Wandelemente verbindenen Schnappverbindung geschehen, dass ausgebildete Nut- und Federbereiche irrevesibel beschädigt werden. Ferner sind aus der EP 0 479 767 A1 und der US 2004/0065031 A1 leimlose Verbindungen zweier Bauelemente bekannt.

Vor diesem Hintergrund bietet die leimlose Verbindung von Elementen zur Herstellung eines Korpus noch Raum für Verbesserungen.

Der vorliegenden Erfindung liegt dabei die Aufgabe zu Grunde, einen leimlosen Korpus sowie ein Verfahren zur leimlosen Verbindung seiner Teile aufzuzeigen, wobei der Korpus eine einfache Herstellung seiner Teile ermöglichen soll, welche innerhalb kürzester Zeit zu einem Korpus verbindbar sind und dieser bei Bedarf auch wieder problemlos zerlegbar ist.

Die Lösung dieser Aufgabe besteht nach der Erfindung in einem leimlosen Korpus, insbesondere für ein Möbelstück, mit den Merkmalen von Patentanspruch 1 sowie in einem Verfahren zum leimlosen Verbinden wenigstens zweier Wandelemente eines Korpus mit den Merkmalen von Patentanspruch 15.

Hiernach umfasst der leimlose Korpus wenigstens drei Wandelemente, welche über im Bereich ihrer Stirnseiten angeordnete Kopplungsmittel miteinander verbindbar sind. Im miteinander verbundenen Zustand der Wandelemente bilden diese einen in sich geschlossenen Rahmen.

Erfindungsgemäß sind als Kopplungsmittel im Bereich der Stirnseiten der Wandelemente eine Nut und eine Feder angeordnet. Die somit im Bereich jeweils einer Stirnseite eines Wandelements angeordnete Nut und Feder sind dafür vorgesehen, mit der im Bereich einer Stirnseite eines weiteren Wandelements angeordneten Nut und Feder verbunden zu werden. Dabei sind die jeweiligen Nuten und Federn im verbundenen Zustand der Wandelemente miteinander in Eingriff bringbar, wobei die Federn sich in eine Längsrichtung der Stirnseiten erstrecken, wobei die Federn jeweils in einzelne im Abstand zueinander angeordnete Federabschnitte unterteilt sind, wobei der Abstand der Federabschnitte untereinander mindestens einer in Längsrichtung gemessenen Länge der Federabschnitte entspricht und die Nuten jeweils Ausnehmungen aufweisen.

Die im Bereich der Stirnseiten vorhandenen Kopplungsmittel können beispielsweise direkt an den Stirnseiten angeordnet sein. Alternativ hierzu kann wenigstens eines der Kopplungsmittel an der Stirnseite oder einer Seitenfläche des Wandelements im Bereich der Stirnseite ausgebildet sein. In einer weiteren Ausgestaltung können die Kopplungsmittel wenigstens eines Wandelements an einer Seitenfläche des Wandelements im Bereich seiner Stirnseite angeordnet sein.

Der besondere Vorteil besteht in einem einfachen sowie robusten Aufbau der an den Wandelementen angeordneten Kopplungsmittel. Die Kopplungsmittel können dabei an den jeweiligen Wandelementen selbst ausgebildet sein. So kann in vorteilhafter Weise die jeweilige Feder einen einstückigen Bestandteil des Wandelements bilden, welche aus dem Wandelement selbst heraus geformt ist. In diesem Zusammenhang kann auch die Nut durch einen entsprechenden Materialabtrag aus dem jeweiligen Wandelement selbst heraus geformt sein.

In einer alternativen Ausgestaltung können die Kopplungsmittel auch aus einem gegenüber den Wandelementen unterschiedlichen Werkstoff gebildet sein.

Unter einem unterschiedlichen Werkstoff wird im Rahmen der Erfindung auch ein zunächst gleicher Werkstoff verstanden, welcher allerdings andere Werkstoffeigenschaften aufweist. So können sich die Werkstoffeigenschaften beispielsweise in unterschiedlichen Festigkeitswerten äußern. Andernfalls können beispielsweise die Wandelemente aus Holz oder einem Holzwerkstoff gebildet sein, während die an den Stirnseiten der Wandelemente angeordneten Kopplungsmittel beispielsweise aus einem Kunststoff bestehen. Selbstverständlich kann auch nur ein Teil der Kopplungsmittel aus einem von den Wandelementen unterschiedlichen Werkstoff gebildet sein. So kann beispielsweise die Feder aus einem unterschiedlichen und nachträglich mit der Stirnseite des Wandelements verbundenen Material bestehen, während die Nut aus dem Wandelement selbst heraus gearbeitet ist.

Insbesondere dann, wenn die Kopplungsmittel zumindest teilweise aus den Wandelementen selbst heraus gearbeitet sind, wird hierdurch eine überaus wirtschaftliche Möglichkeit der leimlosen Verbindung von Wandelementen zu einem Korpus ermöglicht.

Ein weiterer Vorteil besteht darin, dass die Wandelemente untereinander kompatibel ausgeführt sind. Mit anderen Worten muss beim Zusammenbau eines Korpus aus einzelnen Wandelementen nicht darauf geachtet werden, dass nur bestimmte Stirnseiten unterschiedlicher Wandelemente miteinander verbindbar sind. So weisen in vorteilhafter Weise sämtliche Wandelemente im Bereich ihrer Stirnseiten eine einheitliche Kontur ihrer Kopplungsmittel auf, welche jeweils aus einer Nut und einer Feder besteht. Neben einer überaus einfachen und wirtschaftlichen Fertigung können somit problemlos verschiedener Wandelemente im Bereich ihrer Stirnseiten miteinander verbunden werden, wobei die jeweiligen Nuten und Federn miteinander in Eingriff gelangen.

Die im Bereich jeweils einer der Stirnseiten angeordneten Kopplungsmittel können eine voneinander unterschiedliche Dimensionierung aufweisen. Mit anderen Worten kann beispielsweise die Nut eine Tiefe aufweisen, welche größer oder kleiner der Länge der Feder ist. Maßgeblich für die Länge und Tiefe ist hierbei jeweils der größte Abstand eines Bereiches der Kopplungsmittel von der Ebene der Stirnseite.

Gleiches gilt für die sich dazu senkrecht erstreckenden Ausdehnungen der Kopplungsmittel. So kann die Breite der im Bereich einer Stirnseite angeordneten Nut kleiner oder größer der Höhe einer an derselben Stirnseite angeordneten Feder sein.

Der besondere Vorteil in der unterschiedlichen Ausgestaltung von Tiefe sowie Höhe und/oder Höhe sowie Breite der Kopplungsmittel besteht darin, dass diese sich hierdurch genau an die vorherrschenden Platzverhältnisse im Bereich der Stirnseiten der Wandelemente anpassen lassen. Insbesondere bei einer gegenüber der Seitenfläche des Wandelements geneigten Stirnseite läuft dieses endseitig keilförmig zu, wodurch sich der zur Verfügung stehende Bereich zur Anordnung der Kopplungsmittel reduziert. In diesem Zusammenhang steht für eine nah am somit keilförmigen Endbereich des Wandelements gelegene Nut nur noch wenig Material zur Verfügung, innerhalb dem diese ausgebildet sein kann. Hier kann die Tiefe der Nut den Platzverhältnissen entsprechend angepasst sein, um eine optimale Ausnutzung der Materialstärke des Wandelements zu ermöglichen.

Selbstverständlich können sich Länge sowie Tiefe und/oder Höhe sowie Breite der Kopplungsmittel bei Bedarf auch entsprechen.

Unter Wandelementen werden im Rahmen der Erfindung plattenförmige Bauteile verstanden, welche im miteinander verbundenen Zustand geeignet sind, einen geschlossenen Rahmen für einen Korpus zu bilden. Selbstverständlich können diese plattenförmigen Bauteile bei Bedarf auch Ausnehmungen sowie Öffnungen aufweisen, so dass sich das Bauteil selbst nur auf einige Bereiche des Wandelements beschränkt. So kann es sich bei den Wandelementen beispielsweise um Seitenwände sowie einen Boden oder einen Deckel handeln. Bei einem mehreckigen Korpus, welcher beispielsweise fünf oder mehr Ecken aufweist, sind entsprechend mehrere Wandelemente derart miteinander verbunden, dass sie einen Winkel kleiner 180° zwischen sich einschließen. In diesem Fall bilden mehrere Wandelemente eine in sich abgewinkelte Seitenwand.

Selbstverständlich können die Wandelemente als plattenförmige Bauteile sowohl geradlinig als auch gebogene sowie Abstufungen aufweisende Querschnitte besitzen. Weiterhin können die einzelnen Wandelemente auch wenigstens einen Querschnittssprung aufweisen, wobei die unterschiedlichen Querschnittsdicken entweder sprunghaft oder über entsprechende Ausrundungen ineinander übergehen.

Vorteilhafte Ausgestaltungen der Erfindung sind Gegenstand der abhängigen Patentansprüche 2 bis 14.

Hiernach ist wenigstens eine der Stirnseiten eines der Wandelemente gegenüber dessen Seitenfläche in einem Winkel ungleich 90° geneigt. Der Vorteil besteht darin, dass so zwei miteinander verbundene Wandelemente beliebige Winkel zwischen sich einschließen können, in dem wenigstens eines eine Gehrung an seiner Stirnseite aufweist. Grundsätzlich können dabei auch beide miteinander zu verbindende Stirnseiten zweier Wandelemente eine Gehrung aufweisen, so dass beide Stirnseiten im gleichen Winkel oder in voneinander unterschiedlichen Winkeln gegenüber den Seitenflächen des jeweiligen Wandelements geneigt sind.

Bevorzugt sind die Kopplungsmittel bei einer Neigung der Stirnseite gegenüber der Seitenfläche des Wandelements in einem Winkel ungleich 90° an der Stirnseite selbst angeordnet.

Alternativ hierzu kann wenigstens eine der Stirnseiten eines der Wandelemente gegenüber dessen Seitenfläche in einem Winkel von 90° geneigt sein. Mit anderen Worten verlaufen hierbei Stirnseite und Seitenfläche des entsprechenden Wandelements rechtwinklig zueinander.

Die erforderlichen Kopplungsmittel können dabei entweder an der Stirnseite oder an einer Seitenfläche eines Wandelements angeordnet sein. Bevorzugt weisen die miteinander zu koppelnden Wandelemente dabei eine unterschiedliche Anordnung ihrer Kopplungsmittel auf. So können die Kopplungsmittel eines ersten Wandelements an dessen Stirnseite angeordnet sein, wohingegen dass mit dem ersten zu koppelnde zweite Wandelemente entsprechende Kopplungsmittel an einer seiner Seitenflächen besitzt.

Durch die rechtwinklige Ausgestaltung zwischen Stirnseite und Seitenfläche wenigstens eines der zu koppelnden Wandelemente kann dessen die Kopplungsmittel aufweisende Stirnseite folglich an einer der Seitenflächen oder an einer der Stirnseiten eines weiteren Wandelements zur Anlage kommen. Dies ist abhängig von der Anordnung der Kopplungsmittel an dem zu koppelnden Wandelement. Dabei kann die Stirnseite des zu koppelnden Wandelements auch gegenüber einer seiner Seitenflächen geneigt sein.

Auch kann eines der Wandelemente eine rechtwinklige Ausgestaltung zwischen wenigstens einer seiner Stirnseiten und einer seiner Seitenflächen aufweisen, wobei die notwendigen Kopplungsmittel an einer der Seitenflächen im Bereich einer Stirnseite angeordnet sind. In diesem Fall würde das zu koppelnde Wandelement bevorzugt mit seiner Stirnseite an der Seitenfläche des so ausgestalteten Wandelements zur Anlage kommen, wobei es entsprechende Kopplungsmittel an einer seiner Stirnseiten aufweist.

Je nach Ausgestaltung der Kopplungsmittel können diese selbstverständlich auch auf eine der Stirnseiten und eine der Seitenflächen eines Wandelements verteilt sein. Dabei erstrecken sich die Koppllungsmittel somit im Bereich einer seiner Stirnseiten über zwei seiner Flächen, näherhin zwischen einer Stirnseite und einer Seitenfläche.

Weiterhin kann wenigstens eines der Kopplungsmittel eine Ausnehmung aufweisen, welche mit einem Vorsprung eines anderen Kopplungsmittels korrespondiert. Es ist vorgesehen, dass im miteinander verbundenen Zustand der Wandelemente der Vorsprung in vorteilhafter Weise zumindest bereichsweise in die Ausnehmung greifen kann.

In einer alternativen Ausgestaltung wird vorgeschlagen, dass die jeweiligen Federn jeweils einen Vorsprung aufweisen können. Bei dem Vorsprung kann es sich beispielsweise um bereichsweise angeordnete Verdickungen der Federn handeln. In diesem Bereich weist die jeweilige Feder dann eine gegenüber den umliegenden Bereichen größere Höhe auf, welche als sprunghafter oder allmählicher Anstieg des Vorsprungs ausgestaltet sein kann. Demgegenüber kann der jeweilige Vorsprung sich auch über die gesamte Länge der Feder, insbesondere die gesamte Länge der einzelnen Federabschnitte hinweg in deren Längsrichtung erstrecken, beispielsweise in Form einer Leiste.

In diesem Zusammenhang ist weiterhin vorgesehen, dass die jeweiligen Nuten eine entsprechende Ausnehmung aufweisen können. Diese Ausnehmung kann sich beispielsweise über die gesamte sich in Längsrichtung der Stirnseiten erstreckende Länge der Nuten erstrecken oder nur bereichsweise in den Nuten ausgebildet sein.

Die Vorsprünge der Federn sind dafür vorgesehen, mit den jeweils in den Nuten ausgebildeten Ausnehmungen zu korrespondieren. Dabei greift der jeweilige Vorsprung im miteinander verbundenen Zustand der einzelnen Wandelemente zumindest bereichsweise in die innerhalb der Nut ausgebildeten Ausnehmungen.

Die Erfindung sieht vor, dass die Federn der Wandelemente in bevorzugt gleich bleibenden Abständen unterbrochen sind, so dass die jeweils stehen bleibenden Bereiche der jeweiligen Feder in Form einzelner Federabschnitte verbleiben.

Der besondere Vorteil besteht darin, dass der aus einzelnen Wandelementen zu komplettierende Korpus leichter sowie schneller zusammengesetzt werden kann, da beispielsweise der Deckel nicht über die gesamte Tiefe der jeweiligen Wandelemente hinweg in deren Kopplungsmittel eingeschoben werden muss. So ermöglichen die unterbrochenen und somit in einzelne Federabschnitte unterteilten Federn ein kammartiges Zusammenführen der Kopplungsmittel der einzelnen Stirnseiten, welche anschließend durch eine in Längsrichtung der Stirnseiten erfolgende Verschiebung miteinander verriegelt werden.

Vor diesem Hintergrund wird es als besonders vorteilhaft erachtet, dass der Abstand der Federabschnitte untereinander mindestens einer in Längsrichtung gemessenen Länge der Federabschnitte entspricht. Mit anderen Worten entspricht somit eine in Längsrichtung der Stirnseiten gemessene Länge der Federabschnitte höchstens dem Abstand der Federabschnitte untereinander. Hierdurch können die jeweiligen Federabschnitte eines Wandelements problemlos zwischen den Federabschnitten eines weiteren Wandelements hindurch geführt und in dessen Nut eingebracht werden. Selbstverständlich können die einzelnen Federabschnitte auch eine gegenüber ihren Abständen geringere Länge aufweisen, so dass die Federabschnitte spannungsfrei zwischen den Federabschnitten eines benachbarten Wandelements hindurch führbar sind.

Grundsätzlich können sowohl die einzelnen Abstände der Federabschnitte untereinander als auch die jeweiligen Längen der Federabschnitte selbst sich voneinander unterscheiden. So kann beispielsweise die jeweilige Länge der einzelnen Federabschnitte eines Wandelements an die zu erwartenden Belastungen angepasst sein. Selbiges gilt für die Abstände der Federabschnitte untereinander, welche entlang der Stirnseiten des einzelnen Wandelements voneinander unterschiedlich sein können.

Neben der unterschiedlichen Ausgestaltung der Abstände der einzelnen Federabschnitte untereinander sowie der jeweiligen Längen der Federabschnitte eines einzelnen Wandelements können diese auch nur pro Wandelement unterschiedlich ausgestaltet sein. Mit anderen Worten können die miteinander in Eingriff zu bringenden Kopplungselemente zweier Wandelemente sich derart voneinander unterscheiden, dass beispielsweise das eine Wandelement lange Federabschnitte mit jeweils kleinen Abständen zwischen den einzelnen Federabschnitten aufweist, während das andere Wandelement entsprechend kürzere Längen seiner Federabschnitte bei gleichzeitig großen Abständen der Federabschnitte untereinander besitzt.

So können beispielsweise die im Bereich der Randseiten der Wandelemente gelegenen Federabschnitte eine sich von den zwischen ihnen liegenden Federabschnitten unterschiedliche Länge aufweisen. Beispielsweise können die somit äußeren Federabschnitte länger ausgestaltet sein, während die übrigen Federabschnitte eine geringere Länge aufweisen. Auf diese Weise kann der zur Kraftübertragung zwischen den miteinander verbundenen Wandelementen dienende Querschnitt der Federabschnitte bereichsweise an die zu erwartenden Belastungen angepasst sein.

Sofern sowohl der Vorsprung als auch die Ausnehmung sich jeweils aus der Ebene der einzelnen Kopplungsmittel heraus erstrecken, gelangen diese über eine entsprechende Hinterschneidung in einen haltenden Kontakt zueinander. Hierdurch wird das ungewollte Herausziehen der Federn aus den jeweiligen Nuten wirksam verhindert oder zumindest erschwert. Sofern die Federn in einzelne Federabschnitte unterbrochen sind, weisen die Ausnehmungen bevorzugt eine solche Hinterschneidung auf, welche allerdings nur im Bereich der Federabschnitte innerhalb der Nuten ausgebildet ist.

Da jedes der Wandelemente im Bereich seiner Stirnseiten sowohl eine Nut als auch eine Feder besitzt, ist diese Hinterschneidung somit auf die Abschnitte der Nuten im Bereich der Federabschnitte begrenzt. Hierdurch können beispielsweise die Stirnseiten zweier Wandelemente derart angenähert werden, dass deren jeweiligen Federabschnitte zunächst kammartig aneinander vorbeigeführt und in die Nut des jeweils gegenüberliegenden Wandelements eingebracht werden. Durch die anschließende sich in Längsrichtung der Stirnseiten vollziehende Verriegelungsbewegung gelangen die einzelnen Federabschnitte der miteinander zu verbindenden Wandelemente übereinander, wobei deren Vorsprünge jeweils in die Ausnehmungen der Nuten und somit hinter die Hinterschneidung greifen.

Je nach Ausgestaltung können die Hinterschneidungen selbstverständlich auch nicht im Bereich der Federabschnitte, sondern zwischen den einzelnen Federabschnitten innerhalb der Nuten ausgebildet sein. Hierdurch würde das Zusammensetzen der einzelnen Wandelemente zu einem in sich geschlossenen Rahmen des Korpus so erfolgen, dass die Stirnseitenbereiche zweier Wandelemente derart angenähert werden, dass deren jeweiligen Federabschnitte aneinander vorbei gleiten. Durch die anschließende, sich in Längsrichtung der Stirnseiten vollziehende Verriegelungsbewegung werden die einzelnen Federabschnitte aus ihrer übereinander angeordneten Lage innerhalb der jeweiligen Nuten verschoben, wobei deren Vorsprünge jeweils in die zwischen den Federabschnitten des gegenüberliegenden Wandelements angeordneten Ausnehmungen und dabei hinter deren Hinterschneidungen greifen.

Die einzelnen Federn sind durch wenigstens zwei sich gegenüberliegende Flanken begrenzt. Bevorzugt weist dabei jeweils eine der Flanken einen ebenen Verlauf auf, während die der ebenen Flanke gegenüberliegende Flanke eine Fase besitzt. Der sich daraus ergebende Vorteil besteht vorwiegend in einer erleichterten Einführung der jeweiligen Feder in die dafür vorgesehene Nut. Dabei bewirkt die Fase, welche bevorzugt kopfseitig der Feder angeordnet ist, eine Reduzierung deren Querschnittshöhe. Sobald die Feder zumindest bereichsweise in die Nut eingeführt ist, dient die Fase als Einführschräge, welche den Zusammenbau eines Korpus insgesamt erleichtert. Die Fase selbst kann beispielsweise im Querschnitt geradlinig oder gerundet ausgeführt sein.

Die jede der Federn begrenzenden Flanken können parallel zueinander verlaufen. Alternativ hierzu können die sich gegenüberliegenden Flanken der einzelnen Federn einen Winkel zwischen sich einschließen. Grundsätzlich muss sich die jeweilige Ausgestaltung der einzelnen Flanken nicht gleichmäßig über die gesamte Breite der Federn erstrecken, sondern kann sich nur auf einzelne Bereiche beschränken. Mit anderen Worten kann die jeweilige Feder im Querschnitt auch nur bereichsweise geradlinig an einer ihrer Flanken ausgebildet sein, während die restlichen Bereiche auf derselben Seite der geradlinigen Flanke beispielsweise Rundungen oder etwaige Sprünge aufweisen kann. Bei den Rundungen sowie Sprüngen kann es sich beispielsweise um Verdickungen der Federn handeln, wohingegen diese auch in entgegengesetzter Richtung eine Verschlankung der Federn bewirken können.

Um eine möglichst unsichtbare leimlose Verbindung der Wandelemente untereinander zu ermöglichen, sind die im Bereich ihrer Stirnseiten angeordneten Kopplungsmittel bevorzugt so ausgeführt, dass diese nicht bis zu den jeweiligen Randseiten der einzelnen Wandelemente hin verlaufen. So ist im Rahmen der Erfindung vorgesehen, dass die Nuten und Federn von sich jeweils zwischen den Stirnseiten der einzelnen Wandelemente erstreckenden Randseiten der Wandelemente beabstandet sind. Somit reichen die einzelnen Federn sowie Federabschnitte nicht bis ganz an den Rand der Wandelemente, so dass diese auch im zusammengebauten Zustand des Korpus nicht sichtbar innerhalb des Bereichs der Trennebene zwischen den Wandelementen liegen. Mit anderen Worten dient der jeweils stehen gebliebene Randbereich der einzelnen Wandelemente im Bereich derer Randseiten dazu, die einzelnen Kopplungsmittel und damit die leimlose Verbindung dem Sichtbereich zu entziehen und somit zu verdecken.

Um die Kopplungsmittel der Wandelemente derart an ihren jeweils gegenüberliegenden Randseiten zu verdecken, sind die jeweiligen Federn bevorzugt in einzelne Federabschnitte unterteilt. Dies vor dem Hintergrund, da beispielsweise ein den in sich geschlossenen Rahmen eines Korpus komplettierender Deckel nicht über die gesamte Tiefe der einzelnen Wandelemente hinweg in diese eingeschoben werden kann, da beispielsweise die jeweilige Nut verdeckt ist und somit nicht bis zu den Randseiten der Wandelemente reicht.

Sofern die zu erzeugenden Möbelstücke nicht für einen freistehenden Einsatz vorgesehen sind, kann sich das Verdecken der Kopplungsmittel auf die zuvor erläuterte Art auch nur auf eine Sichtseite des jeweiligen Korpus reduzieren. Hierbei sind die Kopplungsmittel in Form von Nuten und Federn lediglich von einer Randseite der einzelnen Wandelemente beabstandet, während sie über die gegenüberliegende Randseite hinaus verlaufen. Von dieser Seite aus wird somit ein vollständiges Einschieben beispielsweise eines Deckels in die bereits miteinander verbundenen Wandelemente ermöglicht.

Bei der im Rahmen der Erfindung genannten Verriegelungsbewegung wird grundsätzlich eine Relativbewegung wenigstens zweier Wandelemente zueinander verstanden, welche über ihre Stirnseiten miteinander im Kontakt stehen und deren jeweiligen Kopplungsmittel dabei zumindest bereichsweise ineinander greifen. Bei der Relativbewegung wird wenigstens eines der Wandelemente in Längsrichtung seiner mit dem jeweils anderen Wandelement in Kontakt stehenden Stirnseite oder Seitenfläche derart verschoben, dass die miteinander in Eingriff stehenden Kopplungsmittel der beiden Wandelemente in Längsrichtung der Stirnseiten aneinander vorbei gleiten.

Um das Ineinandergreifen miteinander zu verbindender Wandelemente zu erleichtern, ist vorgesehen, dass die jeweiligen Breiten der einzelnen Nuten zumindest abschnittsweise an die Geometrie der Federn angepasst sind. So weisen die Nuten zwischen den Federabschnitten bevorzugt eine Breite auf, welche eine Breite der Nuten im Bereich der Federabschnitte übersteigt.

Unter der Breite einer Nut wird vorliegend der Abstand verstanden, welcher zwischen den die Nut begrenzenden Nutwangen liegt.

Mit anderen Worten kann die jeweilige Nut in vorteilhafter Weise zwischen den Federabschnitten in ihrer Breite geweitet sein, so dass eine einfachere Aufnahme der Feder, insbesondere der Federabschnitte eines weiteren Wandelements ermöglicht ist. Dabei kann die somit geweitete Breite der Nuten zwischen den Federabschnitten mindestens einer sich aus den Federabschnitten und deren Vorsprüngen zusammensetzende Höhe des gegenüberliegenden Wandelements entsprechen. Hierdurch ist sichergestellt, dass auch die einen Vorsprung aufweisenden Federabschnitte, welcher zwangsläufig zu einer Verdickung des jeweiligen Federabschnitts führt, problemlos in die Nut des gegenüberliegenden Wandelements eingeführt werden kann.

Da sich diese Aufweitung der Nut nur auf einen Teilabschnitt bezieht, weist die Nut zwischen diesen Aufweitungen eine entsprechend geringere Breite auf. In genau diesen, mit einer geringeren Breite versehenen Teilabschnitt der Nut wird der den Vorsprung aufweisende Federabschnitt über die Verriegelungsbewegung der miteinander zu verbindenden Wandelemente hinein verschoben. Hierbei greift der Vorsprung hinter die durch die Ausnehmung innerhalb der Nut gebildete Hinterschneidung, wie bereits zuvor aufgezeigt.

Alternativ hierzu kann die Breite der Nut selbstverständlich auch im Bereich der Federabschnitte geweitet sein, wohingegen die Nut zwischen den Federabschnitten eine geringere Breite aufweist. Dies ist insbesondere dann der Fall, wenn die miteinander zu verbindenden Wandelemente derart mit ihren Stirnseiten einander angenähert werden, dass deren jeweiligen Federabschnitte während des Eintauchens in die jeweils gegenüberliegende Nut aneinander vorbei gleiten. Auch hierbei wird die eigentliche Verbindung durch die Verriegelungsbewegung der Wandelemente bewirkt. Hierdurch wird in gleicher Weise das Einführen der wenigstens einen Vorsprung aufweisenden Federabschnitte in die Nut des jeweils gegenüberliegenden Wandelements erleichtert.

Während die einzelnen Wandelemente zunächst den in sich geschlossenen Rahmen des Korpus bilden, kann dieser an wenigstens einer seiner noch offenen Seiten verschlossen sein. In üblicher Weise kann der Korpus dabei zumindest eine Rückwand aufweisen, welche neben rein funktionalen Aufgaben auch dessen optische Eigenschaften verbessern kann. Bei den rein funktionalen Aufgaben handelt es sich vorwiegend um den Schutz eines Wandbereichs, vor oder an dem der Korpus, insbesondere das Möbelstück, an seinem Einsatzort angeordnet ist. So kann der Wandbereich sowohl beim Herausnehmen als auch beim Hereinstellen von Gegenständen oder beispielsweise Kleidungsstücken nicht beschädigt oder verschmutzt werden.

Weiterhin kann die Rückwand so ausgestaltet sein, dass diese als ästhetisches Element dient, welches das Aufstellen des Korpus, insbesondere des fertigen Möbelstücks, auch frei im Raum ermöglicht. Hierbei dient die Rückwand auch bei einer rückseitigen Ansicht des Korpus als Sichtfläche, an welche entsprechende Anforderungen gestellt sind.

In jedem Fall dient die Rückwand der Stabilisierung des in sich geschlossenen Rahmens des Korpus, welcher ohne diese eine instabile, da gelenkige Verbindung zwischen den einzelnen Wandelementen aufweist. Durch den Einsatz der Rückwand werden die einzelnen Wandelemente in ihrer Lage zueinander festgelegt. Dabei erfüllt die Rückwand die Aufgabe einer Scheibe, welche den ansonsten gelenkigen Rahmen stabilisiert und aussteift.

So kann die Rückwand beispielsweise zumindest bereichsweise auf die Randseiten des in sich geschlossenen Rahmens des Korpus aufgelegt und über diese mit den Wandelementen verbunden sein. Neben einer Klebeverbindung kann die Rückwand dabei beispielsweise auch über stiftartige Verbindungsmittel, wie Nägel oder Schrauben mit den Wandelementen verbunden sein. Selbstverständlich ist auch eine Kombination des Genannten möglich.

Bevorzugt weisen die Wandelemente eine jeweils innerhalb des Rahmens verlaufende Nut auf, innerhalb der die Rückwand anordenbar ist. Dabei orientiert sich die Breite der Nut an der jeweiligen Dicke der Rückwand, um diese möglichst spielfrei aufzunehmen. Die Nut kann sich dabei bis in die Eckbereiche des in sich geschlossenen Rahmens hinein erstrecken, so dass eine umlaufende Nut innerhalb des Korpus ausgebildet ist. Hierbei ist es notwendig, die Rückwand noch vor dem Schließen des Rahmens in die vorhandenen Nuten der einzelnen Wandelemente einzuschieben, bevor dieser beispielsweise durch einen Deckel geschlossen wird. Dies vor dem Hintergrund, da ein nachträgliches Einschieben der Rückwand in diese Nut sonst nicht möglich ist.

Selbstverständlich können die jeweiligen Nuten auf den Innenseiten des Korpus, näherhin der Wandelemente von den jeweiligen Eckbereichen des in sich geschlossenen Rahmens zumindest bereichsweise beabstandet sein. Hierbei weist die zu verwendende Rückwand zumindest einen zurückspringenden und somit nicht vollends ausgebildeten Eckbereich auf, dessen Größe sich an der zwischen den Nuten und dem Eckbereich verbleibenden Teils der Wandelemente orientiert. Durch diese Ausgestaltung ist es möglich, eine entsprechende Öffnung in einen Eckbereich innerhalb der Rückwand zu belassen, innerhalb dem keine optisch störende Nut innerhalb der Wandelemente angeordnet ist.

Grundsätzlich kann die Rückwand so ausgestaltet sein, dass deren Abmessungen sich an den inneren Abmessungen des Korpus zuzüglich der jeweiligen Tiefe der in die einzelnen Wandelemente eingebrachten Nuten orientiert. Hierdurch wird die Rückwand nach dem Schließen des Rahmens nahezu spielfrei im Bezug auf eine Bewegung der Rückwand innerhalb deren Ebene geführt.

Alternativ hierzu kann die Rückwand im eingebauten Zustand zu wenigstens einem Wandelement, näherhin dessen Seitenfläche beabstandet sein. In diesem Fall ist zumindest ein Keilelement vorgesehen, welches dann zwischen dieser Seitenfläche des Wandelements und der Rückwand anordenbar ist. Das Keilelement überbrückt den zwischen der Rückwand und der Seitenfläche eines Wandelements entstehenden Spalt, wobei es die ansonsten innerhalb der verbleibenden Nuten bewegliche Rückwand in ihrer Lage positioniert. Mit anderen Worten wird die ansonsten bewegliche Rückwand durch das Keilelement in ihrer Lage fixiert und dabei gegenüber der einen Seitenfläche des Wandelements beabstandet.

Durch das wenigstens eine Keilelement kann eine entsprechende Spannung zwischen der Rückwand und wenigstens zwei sich gegenüberliegenden Wandelementen aufgebaut werden, welche sich in die einzelnen Eckbereiche und somit auf die Kopplungsmittel der miteinander verbundenen Wandelemente überträgt. Insbesondere die gegenüber den Stirnseiten geneigte Ausbildung der Kopplungsmittel bewirkt dabei, dass deren Verbindung untereinander verstärkt wird.

Grundsätzlich kann wenigstens eines der Wandelemente im Bereich der für die Rückwand vorgesehenen Nut kürzer ausgestaltet sein. Hierbei springt dieses eine Wandelement hinter die Ebene der Nut benachbarter Wandelemente zurück. Der Vorteil besteht darin, dass die Rückwand auch noch dann in ihre vorgesehene Lage innerhalb des Korpus eingebracht werden kann, obwohl dieser bereits zu einem in sich geschlossenen Rahmen komplettiert ist. Der dabei zurückspringende Teil des einen Wandelements gibt dabei die in den restlichen Wandelementen angebrachten Nuten frei, in welche die Rückwand nachträglich eingeschoben werden kann. In Kombination mit dem Keilelement kann diese dann in ihrer vorgesehenen Lage innerhalb des Korpus fixiert werden.

Beim Einsatz eines solchen Keilelements wird es als besonders vorteilhaft erachtet, dass dieses eine Rastnase aufweist. Die Rastnase ist dafür vorgesehen, dass Keilelement in seiner vorgesehenen Lage vor unbeabsichtigtem Herausfallen oder Herausziehen zu sichern. Dabei greift die Rastnase im angeordneten Zustand des Keilelements hinter die Rückwand, während es zwischen einer Seitenfläche eines der Wandelemente und der Rückwand angeordnet ist. Selbstverständlich kann die Rastnase auch hinter einen Bereich eines Wandelements, beispielsweise in eine Ausnehmung hinein greifen, um in seiner Lage fixiert zu sein. Je nach Ausgestaltung kann es sich bei dieser Ausnehmung auch um die ohnehin zur Aufnahme der Rückwand dienende Nut innerhalb der Wandelemente handeln.

Mit Bezug auf die an den Wandelementen angeordneten Kopplungsmittel ist vorgesehen, dass insbesondere die ebenen Flanken der Federn jeweils in ebene Wangen der Nuten übergehen können. Auf diese Weise bilden die im Bereich jeweils einer Stirnseite der Wandelemente angeordnete Nut und Feder einen nahtlosen Übergang ineinander, wobei die ebene Flanke der Feder gleichmäßig in eine ebene Wange der Nut übergeht. Hierbei erstrecken sich die ebenen Flanken und die ebenen Wangen der Kopplungsmittel in derselben Ebene gegenüber den Stirnseiten. Auch wenn die ebenen Flanken der Federn gegenüber den ebenen Wangen der Nuten verspringen können, wird durch den zuvor beschriebenen ebenen Übergang eine nur geringe Bauhöhe der jeweiligen Kopplungsmittel benötigt und die Herstellung insgesamt vereinfacht.

Die Nuten oder die Federn können gegenüber den Stirnseiten oder den Seitenflächen der Wandelemente geneigt sein. Weiterhin können sowohl die Federn als auch die Nuten gegenüber den Stirnseiten oder den Seitenflächen der Wandelemente geneigt sein. Mit anderen Worten erstreckt sich dabei die jeweilige Nut und/oder die jeweilige Feder an der Stirnseite oder der Seitenfläche wenigstens eines Wandelements nicht in Richtung einer Normalen der Stirnseite oder der Seitenfläche, sondern sind/ist gegenüber dieser Normalen geneigt. Dabei erstrecken sich sowohl die Nut als auch die Feder jeweils in einer Neigeebene, wobei die Nut und die Feder in einer gemeinsamen Neigeebene verlaufen können. Die Nut und/oder die Federn schließen zwischen ihrer jeweiligen Neigeebene und der Stirnseite oder der Seitenfläche einen Winkel ungleich 90° ein.

Die Neigeebene der Kopplungsmittel an einer der Stirnseiten oder der Seitenflächen wird über den von der jeweiligen Feder, insbesondere deren Federabschnitte in die Nut übergehenden Flächen, näherhin durch die Ebene in der sie verlaufen, definiert.

Insbesondere die gegenüber den jeweiligen Stirnseiten oder den Seitenflächen geneigte Ausgestaltung der Kopplungsmittel bewirkt, dass die zu einem in sich geschlossenen Rahmen miteinander verbundenen Wandelemente derart untereinander gekoppelt sind, dass der Rahmen eine in sich geschlossene Verbindung aufweist. So kann beispielsweise ein aus vier Wandelementen zusammengesetzter Korpus derart hergestellt werden, dass zunächst ein Boden mit zwei Seiten verbunden wird. Um diese nun zu einem in sich geschlossenen Rahmen zu komplettieren wird ein entsprechender Deckel so an die bereits miteinander verbundenen Wandelemente angesetzt, dass dieser von einer Randseite aus mit seinen Kopplungsmitteln in die Kopplungsmittel der Seiten eingeschoben wird. Hierbei wird der Deckel mit seinen Kopplungsmitteln randseitig auf die bereits verbundenen Wandelemente aufgesetzt, wobei dessen Kopplungsmittel mit den Kopplungsmitteln der bereits verbundenen Wandelemente deckungsgleich sind. Anschließend kann der Deckel über seine gesamte Tiefe hinweg mit seinen Kopplungsmitteln in die Kopplungsmittel der bereits verbundenen Wandelemente eingeschoben werden, wobei sämtliche Nuten und Federn miteinander in Eingriff gelangen.

Durch die Neigung wenigstens eines der Kopplungsmittel gegenüber einer Stirnseite oder einer Seitenfläche ist eine wirtschaftliche sowie haltbare Ausnutzung der Materialstärke des Wandelements möglich. Mit anderen Worten kann insbesondere durch eine gezielte Kombination aus Neigung und Länge sowie Tiefe und/oder Breite sowie Höhe wenigstens eines der Kopplungsmittel an einer der Stirnseiten oder Seitenflächen der zur Verfügung stehende Platz optimal ausgenutzt werden. Insbesondere eine gegenüber einer Seitenfläche des Wandelements geneigte Stirnseite stellt bereichsweise eine mitunter nur noch geringe Wandstärke zur Verfügung.

Folglich kann durch die gezielte Einstellung der zuvor aufgezeigten Ausgestaltungsmöglichkeiten trotz geringen Abmessungen eine haltbare und ausreichende Anordnung der Kopplungsmittel erfolgen.

Neben der geneigten Ausgestaltung der Kopplungsmittel gegenüber den jeweiligen Stirnseiten oder Seitenflächen der Wandelemente können diese auch weitere Merkmale aufweisen, um die Kopplung der einzelnen Wandelemente untereinander zu verbessern.

Wie bereits erläutert, können die jeweiligen Neigeebenen der Kopplungsmittel zwischen sich und den Stirnseiten der Wandelemente einen Winkel ungleich 90° einschließen. Insbesondere bei einer beispielsweise mittigen Anordnung der Kopplungsmittel auf den jeweiligen Stirnseiten schließt deren Neigeebene zur jeweils beiden Seiten der Kopplungsmittel einen Winkel zwischen sich und den Stirnseiten ein. Da dieser Winkel jeweils ungleich 90° ist, muss dieser zu einer Seite hin zwischen 0° und 90° betragen, während er zur anderen Seite der Neigeebene hin zwischen 90° und 180° beträgt.

Bevorzugt ist vorgesehen, dass der zwischen den Neigeebenen der Kopplungsmittel und den Stirnseiten eingeschlossene Winkel jeweils kleiner oder größer dem Winkel ist, welcher der Neigung einer der Stirnseiten gegenüber der Seitenfläche des Wandelements entspricht. Mit anderen Worten ist vorgesehen, dass die Neigung der Stirnseiten gegenüber den Seitenflächen der Wandelemente ungleich der Neigeebene der Kopplungsmittel gegenüber den Stirnseiten ist.

Hierdurch wird in vorteilhafter Weise eine Abhängigkeit zwischen der Neigung der Stirnseiten und der daran angeordneten Kopplungsmittel aufgezeigt, welche einen idealen Verbund zwischen den zu einem Rahmen komplettierten Wandelementen ermöglicht.

Eine vorteilhafte Weiterentwicklung sieht vor, dass der zwischen den Neigeebenen der Kopplungsmittel und den Stirnseiten eingeschlossene Winkel kleiner oder größer dem Doppelten des Winkels ist, welcher der Neigung einer der Stirnseiten gegenüber der Seitenfläche des Wandelements entspricht. Mit anderen Worten ist somit die Neigung der jeweiligen Neigeebene ungleich dem Zweifachen der Neigung der Stirnseiten gegenüber einer Seitenfläche.

Der Vorteil besteht in einer weiteren Verbesserung des Verbundes zwischen den zu einem Rahmen komplettierten Wandelementen, welche somit als leimloser Korpus einen einfachen Zusammenbau bei gleichzeitig größtmöglichen Haltekräften untereinander bewirkt.

Insbesondere die gegenüber den Stirnseiten geneigte Ausgestaltung der Kopplungsmittel bewirkt, dass dabei eine entsprechende Spannung zwischen den zu verbindenden Stirnseiten entsteht, was zu einer möglichst haltbaren sowie nahezu spaltfreien Verbindung der einzelnen Wandelemente führt.

In einer alternativen Ausgestaltung ist vorgesehen, dass die Federabschnitte zweier miteinander verbundener Stirnseiten gegeneinander geneigt sind. Somit schließen deren jeweilige Neigeebenen einen Winkel kleiner 180° zwischen sich ein. Die Neigung der Federabschnitte gegeneinander kommt dann zum Tragen, wenn die Stirnseiten der zu verbindenden Wandelemente parallel zueinander ausgerichtet sind und aufeinander liegen. In dem so gekoppelten Zustand der zu verbindenden Wandelemente weisen die Federabschnitte der jeweiligen Wandelemente eine Neigung gegeneinander auf, wobei die jeweilige Neigeebene der Federabschnitte des einen Wandelements zwischen sich und einer Neigeebene der anderen Federabschnitte des gegenüberliegenden Wandelements einen Winkel ungleich 180° einschließt.

Selbstverständlich ist die voneinander unterschiedliche und somit einen Winkel ungleich 180° zwischen sich einschließende Ausrichtung der Neigeebenen nicht nur auf eine Stirnseitige Verbindung der Wandelemente begrenzt. So kann besagte unterschiedliche Neigung der miteinander in Eingriff gelangenden Kopplungsmittel grundsätzlich unabhängig von der Lage der Kopplungsmittel an den jeweiligen Wandelementen vorhanden sein. Bei Bedarf kommt es somit lediglich auf die unterschiedliche Ausrichtung der miteinander in Eingriff zu bringenden Kopplungsmittel zweier Wandelemente an.

Hierdurch weisen die Kopplungsmittel bereits innerhalb eines der Eckbereiche des Korpus eine unterschiedliche und somit nicht-parallele Verschiebeebene auf, auf welcher die jeweiligen Federabschnitte in die jeweiligen Nuten einbringbar sind. Selbstverständlich orientieren sich die Nuten in ihrer Ausrichtung dabei an der Ausrichtung der jeweiligen Federabschnitte.

Der besondere Vorteil besteht darin, dass die so gegeneinander geneigten Federabschnitte benachbarter Wandelemente bereits nach der Verriegelungsbewegung derart hintereinander greifen, dass sich beim Zusammenbau des Korpus bereits beim Herstellen einer einzelnen Eckverbindung eine von sich aus haltende Kopplung einstellt. Durch die sich an den Federabschnitten orientierende Ausrichtung der Nuten sind diese ebenfalls gegeneinander geneigt. Hierdurch weisen diese zumindest bereichsweise entsprechende Hinterschneidungen auf, welche mit den ebenfalls geneigten Federabschnitten korrespondieren.

In einer alternativen Ausgestaltung des grundsätzlichen Erfindungsgedankens ist vorgesehen, dass die in unterschiedlichen Eckbereichen des in sich geschlossenen Rahmens gelegenen Kopplungsmittel einen Winkel zwischen ihren jeweiligen Neigeebenen einschließen. Mit anderen Worten weist dabei keines der Kopplungsmittel in den einzelnen Eckbereichen des Korpus eine Orientierung auf, welche parallel zu der Orientierung eines Kopplungsmittels in einem anderen Eckbereich verläuft. Somit weisen die jeweiligen Neigeebenen der einzelnen Kopplungsmittel einen nicht-parallelen Verlauf zu in den anderen Eckbereichen des in sich geschlossenen Rahmens des Korpus gelegenen Kopplungsmitteln auf.

Hierdurch weist keines der Kopplungsmittel eine mögliche Verschieberichtung zum Lösen der Verbindung der Wandelemente auf, welche der möglichen Verschieberichtung der Kopplungsmittel in anderen Eckbereichen entspricht. Auf Grund der jeweils gegenüber den einzelnen Stirnseiten geneigten Ausrichtung der einzelnen Kopplungsmittel in Verbindung mit der jeweils nicht-parallelen Orientierung untereinander wird eine Verbindung der Wandelemente geschaffen, welche nach dem Schließen des Rahmens keine Möglichkeit eines unbeabsichtigten Zerlegens des Korpus bietet.

Da jedes einzelne Wandelement eine vorgegebene Verschieberichtung deren Kopplungsmittel besitzt, um mit den Kopplungsmitteln eines anderen Wandelementes ineinander zu greifen, diese Verschieberichtung allerdings nicht mit den Verschieberichtungen der anderen Wandelemente übereinstimmt, kann folglich auch eine Kombination aus zwei oder mehr Wandelementen nicht gleichzeitig aus dem restlichen aus weiteren Wandelementen zusammengesetzten Rahmen heraus erfolgen.

In einer vorteilhaften Ausgestaltung können die jeweiligen Kopplungsmittel wenigstens eine Ausnehmung aufweisen, welche in einen unmittelbar zu dieser Ausnehmung benachbart angeordneten Vorsprung übergeht. Sowohl die Ausnehmung als auch die Vertiefung korrespondieren dabei mit einer weiteren Ausnehmung sowie Vertiefung eines anderen Kopplungsmittels. Durch diese Anordnung von Vorsprung und Vertiefung an den jeweiligen Kopplungsmitteln greift im miteinander verbundenen Zustand der Wandelemente wenigstens ein Vorsprung zumindest bereichsweise in eine Ausnehmung. Bevorzugt greifen dabei beide Vorsprünge der miteinander zu verbindenden Kopplungsmittel in jeweils eine der beiden Ausnehmungen.

Sowohl die Ausnehmung wie auch der Vorsprung sind jeweils gemeinsam an dem jeweiligen Kopplungsmittel angeordnet. So können die Ausnehmung und/oder der Vorsprung entweder an der Feder oder in der Nut angeordnet sein. Selbstverständlich können die Vertiefung und/oder die Ausnehmung auch in einem Übergangsbereich zwischen einer Nut und einer Feder gelegen sein.

Die unmittelbar benachbarte Anordnung der Ausnehmung und des Vorsprungs zueinander sind im Sinne der Erfindung so zu verstehen, dass diese nicht beispielsweise durch einen Steg oder einen anderweitig ausgestalteten Bereich des jeweiligen Kopplungsmittels voneinander beabstandet sind, sonder direkt aneinandergrenzen und somit unmittelbar ineinander übergehen.

Der besondere Vorteil besteht dabei in einer aus jeweils einer Ausnehmung und einem Vorsprung gebildeten Verriegelungskontur, welche mit einer weiteren, sich ebenfalls aus einer Ausnehmung und einer Vertiefung zusammensetzenden Verriegelungskontur eines weiteren Kopplungsmittels koppelbar ist.

Durch die Kopplung der dabei miteinander in Eingriff stehenden Verriegelungskonturen sind die zu verbindenen Wandelemente derart über ihre Kopplungsmittel in Form von Nut und Feder miteinander gekoppelt, dass ein unbeabsichtigtes Lösen dieser Verbindung wirksam verhindert wird. So weist die Ausnehmung wenigstens eine Hinterschneidung auf, hinter welche der jeweilige Vorsprung zumindest bereichsweise greift.

Bevorzugt sind die jeweiligen Verriegelungskonturen identisch ausgebildet.

Besonders bevorzugt sind die jeweiligen Verriegelungskonturen im zusammengesetzten Zustand der Wandelemente punktsymmetrisch zueinander ausgestaltet. Hierdurch sind der Vorsprung sowie die Ausnehmung einer an einem ersten Kopplungsmittel angeordneten Verriegelungskontur über eine Punktspiegelung um 180° auf die Verriegelungskontur eines mit dem ersten Kopplungsmittel in Eingriff stehenden zweiten Kopplungsmittels abbildbar.

Die sich aus jeweils einer Ausnehmung und einem Vorsprung zusammensetzenden Verriegelungskonturen können so ausgebildet sein, dass diese bereits durch ein Ineinanderstecken der Kopplungsmittel in Erstreckungsrichtung der Federn, insbesondere der Federabschnitte miteinander in einen haltenden Eingriff gelangen. Dabei können die Wandelemente gegen einen sich aus den einander angenäherten und mit entsprechendem Kraftaufwand zu überwindenden Widerstand aus den Verriegelungskonturen miteinander verbunden werden. Hierfür kann beispielsweise ein Bereich des jeweiligen Vorsprungs oder der Ausnehmung elastisch oder federnd ausgestaltet sein, um ein Ineinandergreifen der Verriegelungskonturen zu ermöglichen. Dabei ist darauf zu achten, dass sich keine plastische Verformung zwischen den Verriegelungskonturen einstellt, welche die Haltbarkeit dieser Verbindung herabsetzen oder gar auflösen könnte.

Bevorzugt sind die Verriegelungskonturen aus Vorsprung und Ausnehmung so ausgestaltet, dass diese durch eine relative Verlagerung der miteinander in Eingriff stehenden Kopplungsmittel in Richtung der Stirnseiten der Wandelemente zu einer haltenden Verbindung verbunden werden. Dies gilt insbesondere für die in einzelne Federabschnitte unterteilte Ausgestaltung der Federn. Hierbei wird der jeweilige Vorsprung der Kopplungsmittel zunächst durch ein Ineinanderstecken der Kopplungsmittel so weit mit der ihm zugeweisenen Ausnehmung in Deckung gebracht, dass eine relative Schiebebewegung der Wandelemente in eine parallel zu den Stirnseiten der Wandelemente verlaufende Verriegelungsrichtung ausreicht, um den Vorsprung seitlich in die Ausnehmung zu verlagern.

In einer weiteren Ausgestaltung können der Vorsprung und/oder die Ausnehmung auch eine schräge oder keilförmige Ausgestaltung aufweisen. Dabei weisen die Ausnehmung und/oder der Vorsprung wenigstens einen Bereich mit einem nicht parallelen Verlauf zur Stirnseite oder Seitenfläche des jeweiligen Wandelements auf. Der Vorteil besteht darin, dass sich hierbei mit zunehmendem Ineinanderschieben von Vorsprung und Ausnehmung eine zunehmende Verspannung der Verriegelungskonturen einstellt, in dessen Folge wenigstens eine Stirnseite der miteinander zu verbindenden Wandelemente gegen eine andere Stirnseite oder Seitenfläche gepresst wird.

In einer vorteilhaften Weiterentwicklung der Verriegelungskontur können die Ausnehmung und der Vorsprung eine im Querschnitt S-förmige Kontur miteinander bilden. Der S-förmige Verlauf bietet den Vorteil, dass die sich hierbei ergebende gerundete Ausgestaltung der Verriegelungskontur keine erhöhten Anforderungen an die zur Herstellung der Wandelemente verwendeten Werkstoffe stellt. Dies gilt sowohl für die Fertigung der Verriegelungskontur als auch für deren bestimmungsgemäßen Zweck, da die sich hierbei ergebenden Belastungen jeweils großflächig aufgenommen und übertragen werden können, ohne etwaige die Verriegelungskontur überlastende oder gar verletzende Spannungsspitzen.

Alternativ hierzu können die Ausnehmung und der Vorsprung auch eine im Querschnitt Z-förmige Kontur miteinander bilden. Mit anderen Worten ist die Verriegelungskontur dabei dreiecksförmig ausgestaltet, wobei der Vorsprung und die Ausnehmung eine gemeinsame und ineinander übergehende Schrägfläche aufweisen. Gegenüber der S-förmigen Ausgestaltung ergeben sich hierbei spitz zulaufende Bereiche der Verriegelungskontur, deren Vorteil in einer möglichst großen und bevorzugt planen Fläche zur Ausbildung einer Hinterschneidung zu sehen ist. Hierbei sind erhöhte Anforderungen an das verwendete Material zur Herstellung der Wandelemente zu stellen, um eine haltbare Verrieglungskontur zu ermöglichen.

Selbstverständlich können die Wandelemente Bereiche mit einer erhöhten Dichte und/oder Festigkeit aufweisen, welche bevorzugt an den Kopplungsmitteln ausgebildet sind, um eine möglichst haltbare und bei Bedarf filigrane Ausgestaltung der Verriegelungskonturen zu ermöglichen.

Die sich jeweils aus einer Ausnehmung und einem Vorsprung zusammensetzende Verriegelungskontur kann sowohl endseitig der Feder oder tief im Nutgrund der jeweiligen Nut angeordnet sein. Bevorzugt ist die Verriegelungskontur mittig der Kopplungsmittel ausgebildet. In dieser Ausgestaltung schneidet ein sich zwischen einem Hochpunkt des Vorsprungs und einem Tiefpunkt der Ausnehmung erstreckender Übergangsbereich der Verriegelungskontur die jeweilige Ebene der Stirnseiten der Wandelemente.

Der Vorteil hierbei liegt in einer vollständigen Punktsymmetrie der miteinander zu verbindenden Kopplungsmittel zusammen mit den Verriegelungskonturen. Die erforderliche Punktspiegelung entspricht einer Drehung um 180° um ein Symmetriezentrum, welches in einem Schnittpunkt zwischen den Stirnseiten der miteinander verbundenen Wandelemente und den einander zugewandten Flanken der dabei einander anliegenden Federn der Kopplungsmittel liegt.

Der Übergangsbereich zwischen dem Hochpunkt und dem Tiefpunkt einer Verriegelungskontur kann einen ebenen Flächenabschnitt aufweisen. Dieser kann insbesondere bei der Z-förmigen Verriegelungskontur genau von deren Tiepunkt zu deren Hochpunkt reichen. Demgegenüber kann sich der ebene Flächenabschnitt bei der S-förmigen Verriegelungskontur nur auf einen Bereich zwischen deren Hochpunkt und Tiefpunkt begrenzen.

Der Vorteil des ebenen Flächenabschnitts liegt in einer möglichst großen planen Kontaktfläche zwischen den Verriegelungskonturen, wodurch sich die zu übertragende Haltekraft großflächig übertragen kann und zu geringeren Flächenspannungen führt. Auch für die Herstellung der Verriegelungskonturen bietet der ebene Flächenabschnitt einen eindeutig definierten Bereich, welcher mit entsprechend hoher Präzision in der Fertigung einhergeht.

Bevorzugt können der ebene Flächenabschnitt und die Neigeebene der Kopplungsmittel eines Wandelements einen Winkel zwischen sich einschließen. Hierdurch ist sichergestellt, dass der ebene Flächenabschnitt und die Neigebene der Kopplungsmittel nicht parallel zueinander verlaufen. Der Vorteil besteht dabei in einer entsprechend großen Hinterschneidung innerhalb der miteinander in Eingriff stehenden Verriegelungskonturen, was sich insgesamt positiv auf die Haltbarkeit sowie Belastbarkeit der Verbindung zwischen den Wandelementen auswirkt.

Die jeweils einen Vorsprung und eine Ausnehmung aufweisende Verriegelungskontur ist in Bezug auf einen Querschnitt durch die Kopplungsmittel jeweils zu einer ihrer Seiten hin durch eine Flanke der Feder und zu der anderen Seite hin durch eine Nutwange der Nut begrenzt. In einer vorteilhaften Ausgestaltung sind die Flanke und die Nutwange jeweils eben ausgestaltet, wobei sie sich in gegenüber der Neigeebene der Kopplungsmittel in unterschiedliche Richtungen verspringenden Ebenen erstrecken. Somit verlaufen die Flanke und die Nutwange auf voneinander unterschiedlichen Ebenen, welche jeweils auf unterschiedlichen Seiten der Neigeebene liegen.

Der Vorteil bestet hierbei in einer möglichst großen Ausprägung der jeweiligen Verriegelungskontur, welche sich zwischen der auf jeweils unterschiedlichen Ebenen verlaufenden Flanke und Nutwange erstreckt. Somit kann insbesondere die jeweilige Ausnehmung eine entsprechende Tiefe ihres Tiefpunktes aufweisen, ohne die Kopplungsmittel in unerwünschter Weise zu schwächen. Bevorzugt ist hierfür die Ebene neben der Verriegelungskontur, welche an die Ausnehmung anschließt, gegenüber der anderen Ebene erhöht.

Die vorliegende Erfindung zeigt eine überaus einfache Möglichkeit zur Herstellung eines leimlosen Korpus sowie dessen notwendiger Wandelemente auf, welcher innerhalb kürzester Zeit herstellbar und sowohl zusammensteckbar als auch problemlos zerlegbar ist.

Insbesondere die umlaufend gleich bleibende Ausgestaltung der Kopplungsmittel im Bereich der Stirnseiten der Wandelemente bewirkt, dass diese neben einer vereinfachten Herstellung insbesondere bei der Komplettierung des Korpus keinerlei Beachtung einer etwaigen Zusammenbaufolge verlangen. So können die Stirnseiten der einzelnen Wandelemente mit allen weiteren Wandelementen verbunden werden, sofern diese die benötigten Abmessungen zur Bildung eines in sich geschlossenen Rahmens besitzen.

Die im Stand der Technik bekannten "Mutter-Vater-Elemente", welche jeweils unterschiedliche Ausgestaltungen ihrer Kopplungsmittel an den einzelnen Stirnseiten aufweisen, haben den Nachteil, dass bei deren Zusammenbau grundsätzlich auf die Orientierung der jeweiligen Kopplungsmittel geachtet werden muss. Etwaige verkehrt herum gehaltene Wandelemente müssen folglich zunächst in ihre richtige Orientierung gedreht werden, um mit anderen Wandelementen verbunden zu werden. Neben der hierfür erforderlichen Zeit ist auch der für die Herstellung notwendige Aufwand erhöht.

Durch die im Rahmen der Erfindung aufgezeigte Orientierung der einzelnen Kopplungsmittel wird über dies eine einfache und beim Komplettieren des geschlossenen Rahmens eintretende haltbare Verbindung geschaffen.

Nachfolgend wird eine erfindungsgemäße Lösung zur leimlosen Verbindung wenigstens zweier Wandelemente eines Korpus aufgezeigt.

Die Lösung besteht in einem Verfahren zum leimlosen Verbinden wenigstens zweier Wandelemente eines Korpus, insbesondere für ein Möbelstück. Hierbei werden zunächst die miteinander zu verbindenden Wandelemente einander angenähert, beispielsweise über ihre Stirnseiten, bis deren im Bereich ihrer Stirnseiten angeordneten Kopplungsmittel in Form von Nuten und Federn ineinander greifen. Die so miteinander in Eingriff stehenden Wandelemente werden anschließend über eine begrenzte Relativbewegung zueinander in eine parallel zu einer Längsrichtung der Stirnseiten verlaufenden Verriegelungsrichtung entgegengesetzt verlagert.

Der Vorteil besteht darin, dass die miteinander zu verbindenden Wandelemente hierbei nicht über eine in Neigeebene der Kopplungsmittel gerichtete Bewegung miteinander verbunden werden. Diese im Stand der Technik bekannte Maßnahme erfordert zumeist das Überbrücken einer etwaigen Haltekraft, welche im Anschluss die miteinander verbundenen Wandelemente gegen unerwünschtes Lösen der Verbindung sichert. Mit anderen Worten muss hierbei zunächst ein Widerstand überwunden werden, bei dem beispielsweise ein Bereich der Kopplungsmittel elastisch verdrängt wird, um nach seiner Rückverformung im verbundenen Zustand der Wandelemente mit einer Hinterschneidung zu korrespondieren. Um eine derartige Verbindung wieder aufzulösen, sind entsprechend hohe Kräfte notwendig, welche regelmäßig zur Zerstörung oder zumindest zur Schwächung der weiteren Verbindungsmöglichkeit der so voneinander getrennten Wandelemente führt.

In diesem Zusammenhang ist vorgesehen, dass während der Relativbewegung der Wandelemente zueinander in Verriegelungsrichtung ein jeweils an den Kopplungsmitteln angeordneter Vorsprung in eine ebenfalls an den Kopplungsmitteln angeordnete Ausnehmung greift.

Der besondere Vorteil besteht hierbei in einer zunächst ohne nennenswerten Widerstand erfolgenden Annäherung der Wandelemente, woraufhin die eigentliche, insbesondere haltbare Verbindung zwischen den Wandelementen über die Verriegelungsbewegung in Verriegelungsrichtung erfolgt. So gelangen erst bei der Relativbewegung der Wandelemente zueinander die eine Hinterschneidung aufweisenden Teile der Kopplungsmittel, insbesondere der jeweilige Vorsprung mit einer entsprechenden Ausnehmung miteinander in Eingriff. Auf diese Weise ist zunächst kein Widerstand zu überbrücken, was insgesamt eine materialschonende Art der Verbindung ermöglicht.

Demgegenüber erfolgt das Lösen einer solchen Verbindung ebenfalls über eine Relativbewegung der miteinander verbundenen Wandelemente entgegen der Verriegelungsrichtung, wobei das Ineinandergreifen von Vorsprung und Ausnehmung beendet wird, woraufhin die miteinander in Eingriff stehenden Nuten und Federn problemlos auseinander gezogen werden können.

Die Erfindung wird nachfolgend anhand einiger in den Figuren schematisch dargestellter Ausführungsbeispiele näher erläutert. Es zeigen:
- Figur 1: einen erfindungsgemäßen Korpus in perspektivischer Darstellungsweise;
- Figur 2: einen Teilabschnitt eines Wandelements mit erfindungsgemäßen Kopplungsmitteln in geschnittener Darstellungsweise;
- Figur 3: das Wandelement aus Figur 2 im gekoppelten Zustand mit einem weiteren Wandelement in gleicher Darstellungsweise;
- Figur 4: das Wandelement aus Figur 1 in einem größeren Teilausschnitt in einer perspektivischen Darstellungsweise, welche lediglich zur Illustrierung dient und nicht Bestandteil der Erfindung ist;
- Figur 5: das Wandelement der vorherigen Figuren in einer erfindungsgemäßen Ausgestaltung seiner Kopplungsmittel in gleicher Darstellungsweise;
- Figur 6: eine weitere Ausgestaltungsform eines Eckbereichs des erfindungsgemäßen Korpus in geschnittener Darstellungsweise;
- Figur 7: eine Weiterbildung der Wandelemente aus Figur 6 in selber Darstellungsweise;
- Figur 8: eine alternative Ausgestaltungsform eines Eckbereichs des erfindungsgemäßen Korpus in geschnittener Darstellungsweise;
- Figur 9: eine Weiterbildung eines Eckbereichs des erfindungsgemäßen Korpus in selber Darstellungsweise;
- Figur 10: eine alternative Ausgestaltungsform des Eckbereichs aus Figur 9 in selber Darstellungsweise;
- Figur 11: eine weitere alternative Ausgestaltung der Wandelemente aus Figur 3 in einer Explosionsdarstellung;
- Figur 12: eine Verdeutlichung der Ausgesatltung der Wandelemente aus Figur 11 in perspektivischer Darstellungsweise;
- Figur 13: eine weitere Ausgestaltungsform eines Eckbereichs des erfindungsgemäßen Korpus in geschnittener Darstellungsweise;
- Figur 14: eine Variation eines Eckbereichs des erfindungsgemäßen Korpus in geschnittener Darstellungsweise;
- Figur 15: einen Schnitt durch einen erfindungsgemäßen Korpus;
- Figur 16: eine Prinzipdarstellung einer alternativen Ausgestaltung der Wandelemente in perspektivischer Darstellungsweise;
- Figur 17: eine weitere alternative Ausgestaltung der Wandelemente im Bereich der Kopplungsmittel in geschnittener Darstellungsweise;
- Figur 18: eine abgewandelte Ausgestaltung des in Figur 17 dargestellten Teilabschnitts eines Wandelements in gleicher Darstellungsweise;
- Figur 19: einen Ausschnitt des in Figur 18 dargestellten Wandelements in Verbindung mit einem anderen Wandelement in selber Darstellungsweise;
- Figur 20: eine weitere Ausgestaltungsvariante der Wandelemente in geschnittener Darstellungsweise sowie
- Figur 21: eine Ausgestaltungsvariante des Verbindungsbereichs der Wandelemente aus Figur 20 in selber Darstellungsweise.

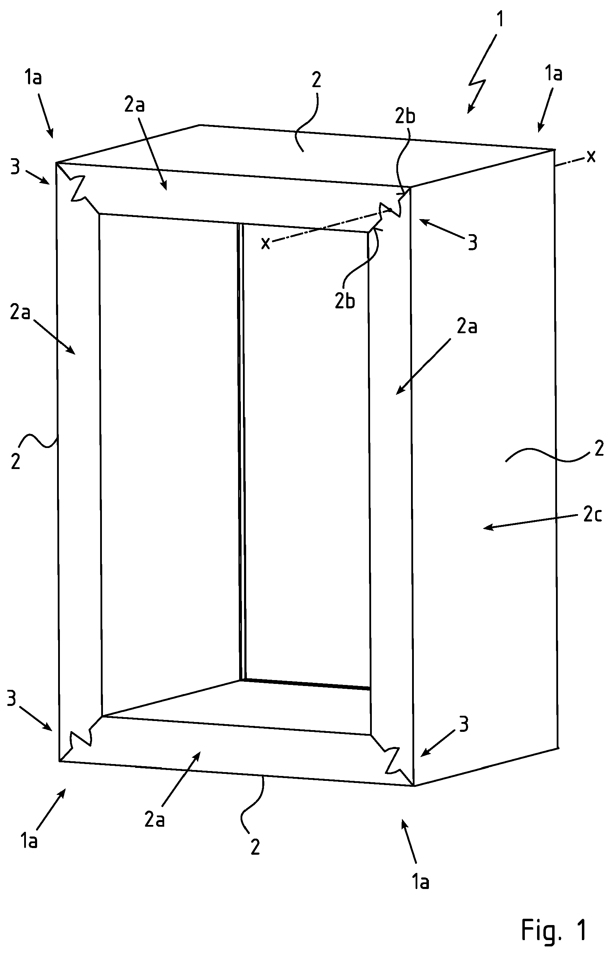

Figur 1 zeigt eine perspektivische Darstellung eines erfindungsgemäßen Korpus 1. Der Korpus 1 umfasst vier Wandelemente 2, welche in Form von zwei Seiten sowie einem Boden und einem Deckel einen in sich geschlossenen Rahmen bilden.

Zur Verdeutlichung sind vorliegend die Wandelemente 2 in den Eckbereichen 1a des Korpus 1 verbindende Kopplungsmittel 3 sichtbar dargestellt, wobei sie bis zu den Randseiten 2a der Wandelemente 2 reichen.

Die Wandelemente 2 stehen mit ihren Stirnseiten 2b in den Eckbereichen 1a des Korpus 1 miteinander in Kontakt. Dabei erstrecken sich die Kopplungsmittel 3 jeweils in vorliegend nicht einsehbarer Weise in eine Längsrichtung x der Stirnseiten 2b, so dass sowohl die Stirnseiten 2b als auch die darauf angeordneten Kopplungsmittel 3 sich zwischen den Randseiten 2a der Wandelemente 2 verlaufen. Den überwiegend sichtbaren Teil des vorliegend offenen Korpus 1 bilden die jeweiligen Seitenflächen 2c der Wandelemente 2.

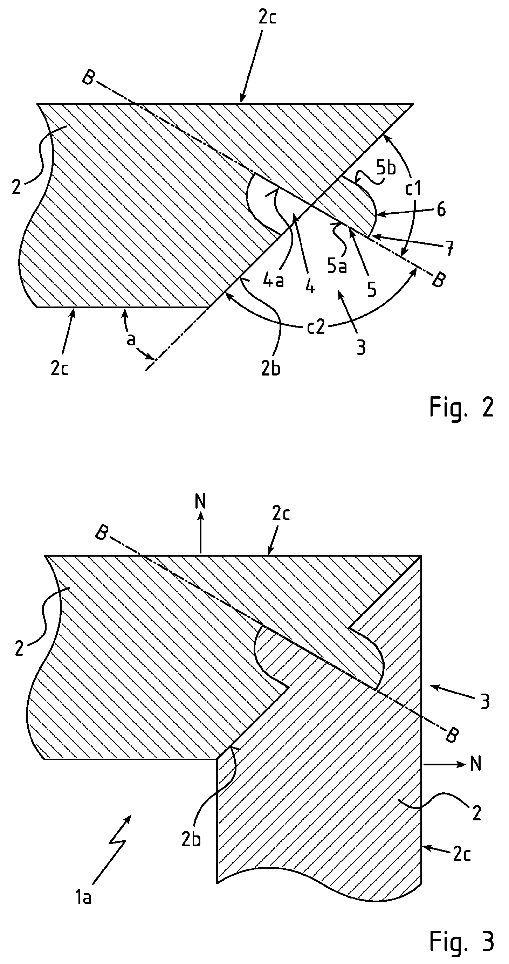

Figur 2 stellt einen Randbereich eines der Wandelemente 2 dar. In dieser Ansicht wird deutlich, dass die an der Stirnseite 2b angeordneten Kopplungsmittel 3 sich aus einer Nut 4 und einer Feder 5 zusammensetzen. Die Stirnseite 2b selbst ist dabei in Form einer Gehrung gegenüber dessen Seitenflächen 2c in einem Winkel a ungleich 90° geneigt. Vorliegend beträgt der Winkel a 45°.

Die Feder 5 weist eine der Nut 4 zugewandte ebene Flanke 5a auf, welche nahtlos in eine ebenfalls in derselben Eebene verlaufende Nutwange 4a der Nut 4 übergeht.

Die Feder 5 ist durch die ebene Flanke 5a und eine weitere Flanke 5b begrenzt. Die der ebenen Flanke 5a der Feder 5 gegenüberliegende Flanke 5b weist dabei eine Fase 6 auf. Vorliegend ist die Fase 6 gerundet ausgebildet, so dass die sie aufweisende Flanke 5b insgesamt einen gebogenen Verlauf aufweist. Durch die Fase 6 wird insbesondere das ineinander Schieben zweier zu verbindender Wandelemente 2 erleichtert, da die Fase 6 eine Verschlankung der Feder 5 zu deren Ende 7 hin bewirkt.

Figur 3 zeigt den in Figur 2 dargestellten randseitigen Abschnitt des Wandelements 2 in Verbindung mit einem weiteren Wandelement 2, welche gemeinsam einen der bereits in Figur 1 gezeigten Eckbereiche 1a des hier nicht näher dargestellten Korpus 1 bilden. Beide miteinander verbundenen Wandelemente 2 weisen dieselbe Ausgestaltung ihrer Kopplungsmittel 3 auf. Der Unterschied zwischen den Kopplungsmitteln 3 der miteinander verbundenen Wandelemente 2 besteht darin, dass diese um einen Schnittpunkt S der jeweiligen Ebene der sich berührenden Stirnseiten 2b und ebenen Flanken 5a der Federn 5 herum um 180° verdreht ausgeführt sind. Vorliegend stehen die sich im Schnittpunkt S kreuzenden Ebenen der Stirnseiten 2b und der ebenen Flanken 5a in einem rechten Winkel zueinander.

In dieser Ansicht und mit Blick auf Figur 2 wird deutlich, dass die Wandelemente 2 derart untereinander verbindbar sind, dass deren Kopplungsmittel 3, näherhin die jeweilige Nut 4 und Feder 5 eines Wandelements 2 mit der jeweils anderen Nut 4 und Feder 5 des benachbarten Wandelements 2 miteinander in Eingriff stehen. Dabei sind die Nuten 4 an die Federn 5 formangepasst.

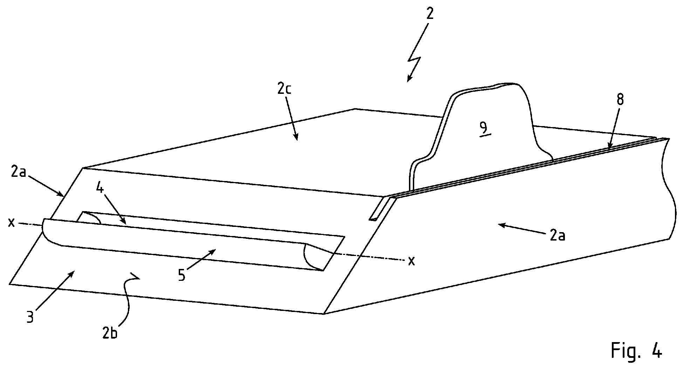

Figur 4 zeigt einen größeren Abschnitt eines Wandelements 2 aus Figur 1 in perspektivischer Darstellungsweise. Hierbei wird deutlich, dass sich die Feder 5 in Längsrichtung x der Stirnseite 2b erstreckt. Entgegen der vereinfachten Darstellung der Figur 1 sind die hier sichtbaren Kopplungsmittel 3 so ausgeführt, dass diese im komplettierten Zustand der Wandelemente 2 zu einem fertigen Korpus 1 verdeckt angeordnet sind. Dies wird erreicht, indem sowohl die Nut 4 als auch die Feder 5 von den sich jeweils zwischen den Stirnseiten 2b der einzelnen Wandelemente 2 erstreckenden Randseiten 2a der Wandelemente 2 beabstandet sind. Hierdurch reichen die Kopplungsmittel 3 nicht bis an die Randseiten 2a der Wandelemente 2, wobei insbesondere die Nut 4 diese nicht durchbricht.

Mit Bezug auf die Darstellung der Figur 4 ist auf der oberen Seitenfläche 2c, welche vorliegend die Innenseite des Wandelements 2 bildet, eine weitere Nut 8 angeordnet, welche entlang der rechten Randseite 2a des Wandelements 2 verläuft und von dieser beabstandet ist. Diese Nut 8 ist bereits in Figur 1 im hinteren Bereich angedeutet. Im zusammengesetzten Zustand der einzelnen Wandelemente 2 verläuft die Nut 8 innerhalb des Korpus 1, innerhalb der eine vorliegend nur angedeutete Rückwand 9 anordenbar ist.

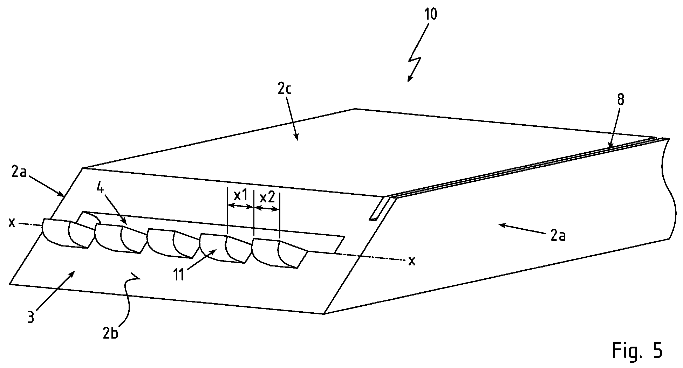

Figur 5 stellt eine alternative Ausgestaltungsform des bereits in den vorherigen Figuren dargestellten Wandelements 2 in Form eines weiteren Wandelements 10 dar. Im Gegensatz zu dem vorherigen Wandelement 2 weist das hier vorliegende Wandelement 10 eine geänderte Ausgestaltungsform der Feder 5 auf. Die Feder 5 ist hierbei in einzelne Federabschnitte 11 unterteilt. Die einzelnen Federabschnitte 11 sind dabei in einem Abstand x1 zueinander angeordnet. Um die Federabschnitte 11 zu erhalten, ist die Feder 5 kammartig unterbrochen. Eine in Längsrichtung x der Stirnseite 2c gemessene Länge x2 der Federabschnitte 11 entspricht dabei maximal dem Abstand x1 der Federabschnitte 11 untereinander. Bevorzugt ist die Länge x2 der Federabschnitte 11 kleiner als der zwischen ihnen gelegene Abstand x1.

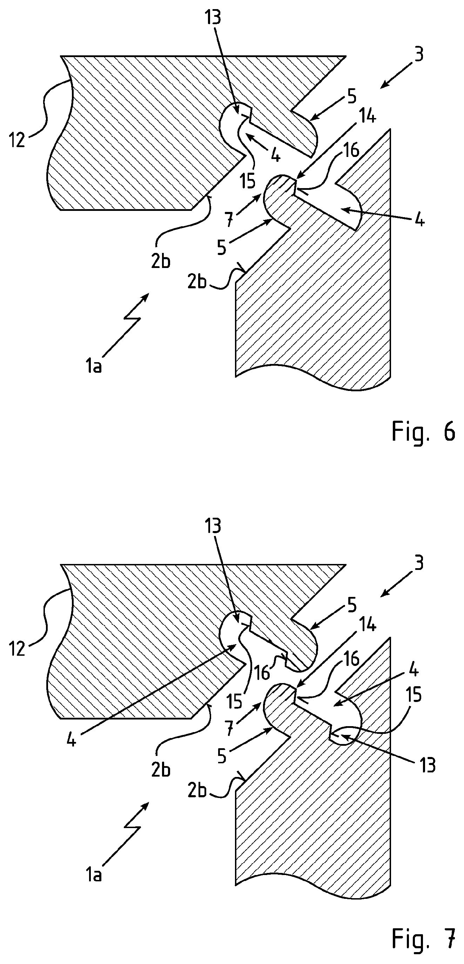

Figur 6 zeigt eine alternative Ausgestaltungsform von Wandelementen 12 in einer geschnittenen Darstellungsform. Die vorliegenden Wandelemente 12 zeigen lediglich deren Abschnitte im Eckbereich 1a eines Korpus 1. Die Kopplungsmittel 3 der Wandelemente 12 greifen dabei zur Verdeutlichung deren Ausgestaltung nicht ineinander. Jedes der Kopplungsmittel 3 der Wandelemente 12 umfasst eine Nut 4 und eine Feder 5, wobei mit Bezug auf die Darstellung der Figur 6 das sich waagerecht erstreckende obere Wandelement 12 eine innerhalb der Nut 4 ausgebildete Ausnehmung 13 aufweist.

Demgegenüber weist die Feder 5 des sich mit Bezug auf die Darstellung der Figur 6 senkrecht erstreckenden Wandelements 12 einen entsprechenden Vorsprung 14 im Bereich ihres Endes 7 auf. Die Ausnehmung 13 und der Vorsprung 14 sind dabei so ausgestaltet, dass sie im zusammengefügten Zustand der Wandelemente 12 miteinander korrespondieren.

Dabei greift im miteinander verbundenen Zustand der beiden Wandelemente 12 der Vorsprung 14 in nicht näher dargestellter Weise zumindest bereichsweise in die Ausnehmung 13. Die Ausnehmung 13 weist hierfür eine Hinterschneidung 15 auf, welche der Vorsprung 14 mit einem Teilbereich 16 hintergreifen kann. Bevorzugt ist die Hinterschneidung 15 in nicht näher dargestellter Weise nur im Bereich der in Figur 5 dargestellten Federabschnitte 11 innerhalb der Nut 4 ausgebildet. Je nach Ausgestaltung der Kopplungsmittel 3 in Kombination mit der Ausnehmung 13 und dem Vorsprung 14 kann somit eine biegesteife Ecke im Eckbereich 1a erzeugt werden.

Figur 7 zeigt eine Weiterbildung der in Figur 6 dargestellten Wandelemente 12, wobei die jeweiligen Kopplungsmittel 3 identisch ausgebildet sind. So weisen die an den jeweiligen Stirnseiten 2b angeordneten Nuten 4 jeweils eine Ausnehmung 13 mit einer entsprechenden Hinterschneidung 15 auf, wohingegen die an den gegenüberliegenden Stirnseiten 2b angeordneten Federn 5 jeweils einen Vorsprung 14 aufweisen. Sofern die beiden Wandelemente 12 zusammengefügt sind, hintergreifen die an den Federn 5 angeordneten Vorsprünge 14 mit ihren Teilbereichen 16 die jeweilige Hinterschneidung 15 der Ausnehmungen 13.

Selbstverständlich können sowohl die Ausnehmungen 13 als auch der Vorsprung 14 in sämtlichen Kopplungsmitteln 3 angeordnet werden, welche insbesondere eine durchgehende Feder 5 oder einzelne Federabschnitte 11 aufweisen.

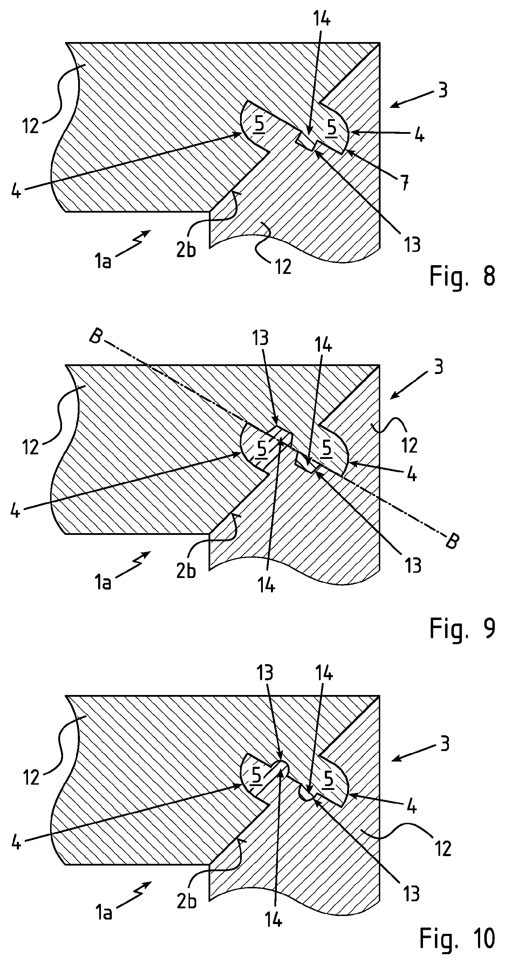

Figur 8 zeigt eine alternative Ausgestaltungsform eines Eckbereichs 1 a zu dem bereits in Figur 6 dargestellten Eckbereich 1a. Gegenüber der Darstellung der Figur 6 sind vorliegend die beiden Wandelemente 12 nicht in einer Explosionsdarstellung, sondern in einem über ihre Kopplungsmittel 3 miteinander verbundenen Zustand dargestellt. Weiterhin weisen die jeweils an den Stirnseiten 2b der Wandelemente 12 angeordneten Kopplungsmittel 3 in Form von Nuten 4 und Federn 5 ineinander, wobei sich die Darstellung der Figur 8 in der Anordnung des Vorsprungs 14 unterscheidet.

Mit Bezug auf die Darstellung der Figur 8 weist lediglich die Feder 5 des oberen, sich waagerecht erstreckenden Wandelements 12 einen Vorsprung 14 auf. Gegenüber der Darstellung in Figur 6 ist dieser nicht am Ende 7 der Feder 5 angeordnet, sondern von diesem beabstandet.

Vorliegend ist der Vorsprung 14 zwischen dem Ende 7 der Feder 5 und der Ebene der Stirnseiten 2b der miteinander verbundenen Wandelemente 12 ausgebildet. Das entsprechend andere Wandelement 12 weist hierfür innerhalb seiner Nut 4 eine entsprechende Ausnehmung 13 auf, in welche der Vorsprung 14 greift. Wie zu erkennen, sind sowohl Ausnehmung 13 als auch Vorsprung 14 einander formangepasst, wobei sie einen eckigen, insbesondere rechteckigen Querschnitt aufweisen.

Figur 9 zeigt eine Weiterbildung des Eckbereichs 1a aus Figur 8. Hierbei weisen beide Federn 5 der miteinander in Eingriff stehenden Kopplungsmittel 3 der so miteinander verbundenen Wandelemente 12 jeweils einen Vorsprung 14 auf, welcher sich in die entsprechenden Ausnehmungen 13 innerhalb der Nuten 4 erstrecken. Mit Bezug auf die sich in einer Ebene berührenden ebenen Flanken 5a der Federn 5 weisen die an den Federn 5 angeordneten Vorsprünge 14 voneinander weg. Selbiges gilt für die entsprechenden Ausnehmungen 13 innerhalb der Nuten 4, in welche hinein die Vorsprünge 14 greifen. Wie bereits in Figur 8 gezeigt, sind dabei die Ausnehmungen 13 sowie Vorsprünge 14 einander formangepasst.

Grundsätzlich kann der Kontakt zwischen Vorsprung 14 und Ausnehmung 13 in nicht näher dargestellter Weise auch nur auf einen Teilbereich 16 des Vorsprungs 14 beschränkt sein, welcher einen entsprechenden Kontakt zu einer Hinterschneidung 16 innerhalb der Ausnehmung 13 aufweist. Wie zu erkennen, sind vorliegend die Ausnehmungen 13 und Vorsprünge 14 eckig ausgebildet, wobei deren sich gegenüberliegenden Seiten zueinander geneigt sind. Durch die Neigung der Seiten verbreitert sich der jeweilige Querschnitt der Ausnehmungen 13 sowie Vorsprünge 14 zu den sich berührenden ebenen Flanken 5a der Federn 5 hin.

Figur 10 zeigt eine Weiterbildung des Eckbereichs 1a aus Figur 9. Bei ansonsten gleicher Anordnung weisen die Vorsprünge 14 hierbei keinen eckigen, sondern kuppelartig gerundeten Querschnitt auf. Daran formangepasst weisen die Ausnehmungen 13 eine entsprechend gerundete Kontur ihres Querschnitts auf.

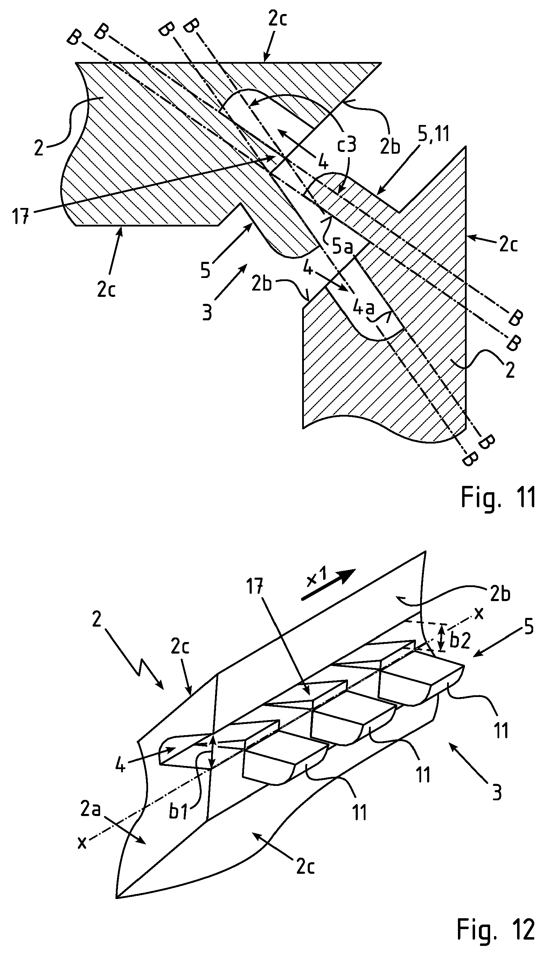

Figur 11 zeigt eine alternative Ausgestaltung der Wandelemente 2 aus Figur 3 in einer Explosionsdarstellung. Hierbei sind die jeweiligen Stirnseiten 2b der Wandelemente 2 zueinander beabstandet dargestellt, so dass diese noch nicht zu einem Eckbereich 1a miteinander verbunden sind. Entgegen dem Wandelement 2 der Figuren 2 und 3 weisen die Nuten 4 und Federn 5 hierbei keinen Übergang ineinander auf, welcher in derselben Ebene verläuft. Im Gegenteil sind hierbei die Federn 5, insbesondere deren Federabschnitte 11, eines der Wandelemente 2 derart geneigt, dass deren Neigeebenen B einen Winkel c3 zwischen sich und der Ebene der ebenen Flanke 5a der Feder 5 des benachbarten Wandelements 2 einschließen, welcher ungleich 180° ist. Vorliegend beträgt der Winkel c3 169°.

Weiterhin sind die Nut 4 eines der Wandelemente 2 sowie die damit korrespondierende Feder 5 des benachbarten Wandelements 2 gegenüber ihnren jeweiligen Stirnseiten 2b der Wandelemente 2 geneigt. Dabei definiert eine ebene Flanke 5a der Feder 5 eine Neigeebene B der Feder 5. Die Flanke 5a der Feder 5 verläuft innerhalb der Neigeebene B, wobei die Flanke 5a in eine nicht gegenüber der Stirnseite 2b geneigte und somit nicht in derselben Neigeebene B verlaufenden Nutwange 4a der Nut 4 übergeht.

Vorliegend wird somit die Neigeebene B durch die Flanke 5a bestimmt, wobei die Neigeebene B und die Stirnseite 2b des Wandelements 2 zu beiden Seiten jeweils einen Winkel c1, c2 ungleich 90° zwischen sich einschließen. In der dargestellten Ausführung beträgt der kleinere Winkel c1 zwischen der Neigeebene B und der Stirnseite 2b 75°. Demgegenüber beträgt der somit größere Winkel c2 zwischen der Neigeebene B und der Stirnseite 2b entsprechend 105°.

Die jeweils zwischen der Neigeebene B und der Stirnseite 2b eingeschlossenen Winkel c1, c2 unterscheiden sich vor dem zwischen der Stirnseite 2b und der Seitenfläche 2c des Wandelements 2 eingeschlossenen Winkel a.

Weiterhin wird die erfindungsgemäße Relation zwischen den jeweiligen Neigungen der Neigeebene B gegenüber der Stirnseite 2b sowie der Stirnseite 2b selbst gegenüber der Seitenfläche 2c des Wandelements 2 eingehalten. Hiernach sollen beide Winkel c1, c2 der Neigeebene B gegenüber der Stirnseite 2b größer oder kleiner dem zwischen der Seitenfläche 2c des Wandelements 2 und dessen Stirnseite 2b eingeschlossenen Winkels a sein. Vorliegend beträgt der Winkel a zwischen der Stirnseite 2b und der Seitenfläche 2c des Wandelements 2 45°, so dass 90° dem Doppelten dieses Winkels a entspricht. Die jeweiligen, zwischen der Neigeebene B und der Stirnseite 2b des Wandelements 2 eingeschlossenen Winkel c1, c2 betragen 75° und 105°. Vorliegend sind diese Winkel c1, c2 somit kleiner oder größer, näherhin ungleich zu dem mit 90° Doppelten des Winkels a zwischen der Stirnseite 2b und der Seitenfläche 2c.

Die gegeneinander geneigten Nutwangen 4a der Nut 4 und die ebenen Flanken 5a der Feder 5, insbesondere deren Federabschnitte 11 der Wandelemente 2 gehen unter Ausbildung einer Keilfläche 17 ineinander über.

Die Neigung wenigstens eines der Kopplungsmittel 3 gegenüber seiner Stirnseite 2b des Wandelements 2 bewirkt, dass dieses nach seiner Komplettierung mit weiteren Wandelementen 2 zu einem in sich geschlossenen Rahmen nicht mehr ohne weiteres von diesen getrennt werden kann. So können auf Grund der Neigeebene B, innerhalb derer sich die Kopplungsmittel 3 erstrecken, die Wandelemente 2 nicht mehr in Richtung einer Normalen N zu den jeweiligen Seitenflächen 2c voneinander getrennt werden.

Grundsätzlich ist die in den Figuren 1 bis 12 dargestellte Ausführungsform der Kopplungsmittel 3, näherhin deren Nuten 4 sowie Federn 5 nicht auf die dargestellten Formen sowie Lagen beschränkt. Hierbei handelt es sich lediglich um Ausführungsbeispiele, welche eine effektive Verbindung der einzelnen Wandelemente 2, 10, 12 untereinander ermöglichen. So können die Kopplungsmittel 3 beispielsweise auch um deren jeweilige Ebene, insbesondere Neigeebene B herum gespiegelt angeordnet sein. In Kombination mit ihrer jeweiligen Lage im Bereich der Stirnseiten 2b ist somit eine optimale Ausnutzung des vorhandenen Querschnitts im Eckbereich 1a der Wandelemente 2, 10, 12 möglich, so dass diese trotzt Ausnehmungen 13 sowie Nuten 4 genügend Material zu deren Seitenflächen 2c sowie Stirnseiten 2b hin aufweisen, um eine haltbare Verbindung zu schaffen.

Figur 12 verdeutlicht in einer Prinzipdarstellung die Ausgestaltung der Stirnseite 2b eines der Wandelemente 2 aus Figur 11, näherhin das darin rechts in der Darstellung senkrecht verlaufende Wandelement 2. In dieser gegenüber der Figur 11 gedrehten perspektivischen Ansicht wird die Ausbildung der jeweiligen Kopplungsmittel 3 deutlich. Innerhalb des hier als Teilabschnitt dargestellten Teils des Wandelements 2 im Bereich seiner Stirnseite 2b verläuft die in das Wandelement 2 hinein gerichtete Nut 4 entlang der Längsrichtung x der Stirnseite 2b. Die bereits in Figur 11 angedeuteten rampenförmigen Keilflächen 17 sind hierbei nur im Bereich der einzelnen Federabschnitte 11 der Feder 5 innerhalb der Nut 4 angeordnet, wodurch sich der jeweilige Querschnitt der Nut 4 über ihren Verlauf in Längsrichtung x hinweg verändert.

So weist die Nut 4 zwischen den Federabschnitten 11 eine Breite b1 auf, welche aufgrund der Keilflächen 17 im Bereich zwischen den Federabschnitten 11 auf eine geringere Breite b2 der Nut 4 zurückspringt.

Es ist vorgesehen, dass die zwischen den Federabschnitten 11 gelegene Breite b1 der Nut 4 einer Höhe der Federabschnitte 11 des gegenüberliegenden Wandelements entspricht, um diese problemlos in die Nut 4 einführen zu können. Die Höhe der Federabschnitte 11 wird hierbei maßgeblich durch deren Neigung gegenüber der Stirnseite 2b bestimmt. Mit anderen bestimmt sich besagte Höhe nicht durch die rein baulichen Höhe der Federabschnitte 11, sondern vielmehr durch ihre am weitesten voneinander entfernten Bereiche zwsichen den sich gegenüberliegenden Flanken 5a, 5b der geneigten Feder 5, parallel zur Stirnseite 2b gemessen.

Auch bei gegeneinander geneigten Federn 5, näherhin deren Federabschnitten 11 zweier Wandelemente 2, ist vorgesehen, dass die Breite b1 der Nut zwischen den Federabschnitten 11 so ausgestaltet ist, dass die Federabschnitte 11 des benachbarten Wandelements 2 auch dann in die Nut 4 eingeführt werden können, sofern deren Neigeebene B von der durch die Richtung des Zusammenbringens der Wandelemente 2 definierten Einschieberichtung abweicht. Mit anderen Worten würde hierbei das jeweilige Ende der Feder 5, insbesondere deren Federabschnitten 11, beim Einführen in die Nut 4 vor den ansonsten vorhandenen Randbereich der Nut 4 stoßen, sofern die Nut 4 eine durchgehend geringe Breite b2 wie im Bereich der Federabschnitte 11 aufweisen würde.

Die gegeneinander geneigten Federn 5, insbesondere deren Federabschnitte 11, bewirken, dass der jeweilige Eckbereich 1 a des Korpus 1 bereits nach dem Verbinden der Stirnseiten 2b zweier Wandelemente 2 eine haltbare Kopplung aufweist.

Gegeneinander geneigte Federn 5 liegen im Rahmen der Erfindung auch dann vor, wenn nur eine der Federn 5 gegenüber der Stirnseite 2b des Wandelements 2 geneigt ist, an der sie angeordnet ist.

Mit Blick auf Figur 12 wird deutlich, dass zwei Wandelemente 2 zunächst derart ineinander geschoben werden, dass deren jeweiligen Federabschnitte 11 in Längsrichtung x zueinander versetzt verlaufen, so dass die jeweiligen Federabschnitte 11 eines der Wandelemente 2 zwischen den Federabschnitten 11 des benachbarten Wandelements 2 sowie den dahinter liegenden Keilflächen 17 hindurch in die jeweilige Nut 4 eingeführt werden können. Anschließend erfolgt eine Relativbewegung der mit ihren Stirnseiten 2b aufeinander liegenden Wandelemente 2, wobei die Wandelemente 2 in eine parallel zur Längsrichtung x verlaufende Verriegelungsrichtung x1 entgegengesetzt zueinander verlagert werden.

Hierbei werden die jeweiligen Federabschnitte 11 auf die Keilflächen 17 innerhalb der Nut 4 des benachbarten Wandelements 2 verlagert, welche für diese eine Hinterschneidung bilden. Die nunmehr mit ihren Flanken 5a auf den Keilflächen 17 aufliegenden Federabschnitte 11 sind somit innerhalb der Nut 4 des jeweils benachbarten Wandelements 2 festgelegt.

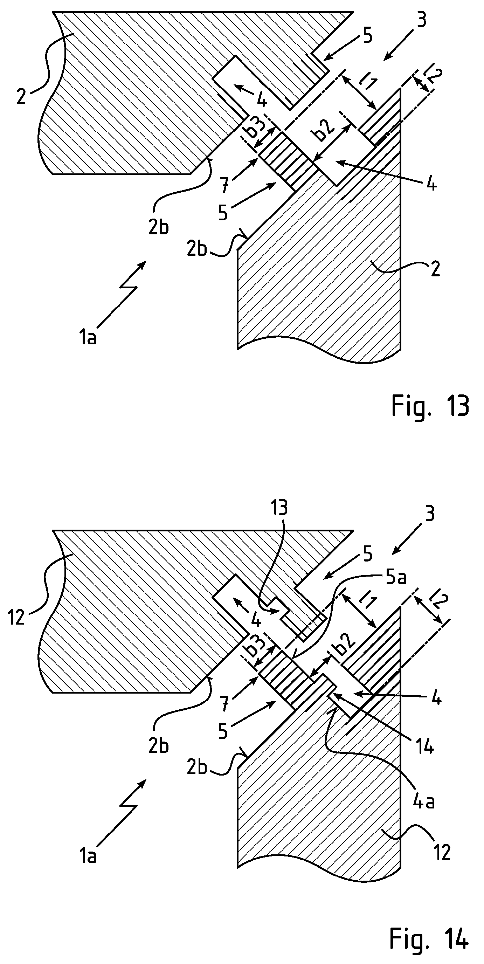

Figur 13 zeigt eine alternative Ausgestaltung der bereits aus den Figuren 2 bis 5 bekannten Kopplungsmittel 3 an den Stirnseiten 2b der Wandelemente 2. Die vorwiegend rechteckig ausgebildeten Nuten 4 und Federn 5 unterscheiden sich derart von den vorherigen Ausführungen, als dass diese keine identischen Abmessungen aufweisen. Mit anderen Worten sind die sich an den Stirnseiten 2b der Wandelemente 2 gegenüberliegenden Federn 5 und die damit korrespondierenden Nuten 4 unterschiedlich groß.

Hierdurch weisen die an jeweils einer der Stirnseiten 2b angeordneten Kopplungsmittel 3 eine sich voneinander unterscheidende Dimensionierug auf. So weist das mit Bezug auf die Darstellung der Figur 13 rechts gezeigte und sich senkrecht erstreckende Wandelement 2 eine Feder 5 auf, deren Höhe b3 unterhalb der Breite b2 der ebenfalls an demselben Wandelement 2 angeordneten Nut 4 liegt. Folglich unterscheiden sich die Breite b2 und Höhe b3 der an einer Stirnseite 2b angeordneten Kopplungsmittel.

Gleiches gilt für deren jeweiligen Erstreckungen senkrecht zum Verlauf der Kopplungsmittel entlang der Stirnseite 2b. So ist die Feder 5 mit ihrer Länge l1 deutlich länger ausgebildet, als eine Tiefe l2 der an demselben Wandelement 2 angeordneten Nut 4.

Durch diese unterschiedichen Ausgestaltungen der Nuten 4 und Federn 5 wird eine optmale Anpassung der jeweiligen Größe der Kopplungsmittel 3 an den im Bereich der Stirnseiten 2b verbleibenden Querschnitt der Wandelemente 2 erreicht.

Figur 14 zeigt eine weitere Variante der bereits in den Figuren 6 bis 10 dargestellten Wandelemente 12, deren Kopplungsmittel 3 mindestens eine Ausnehmung 13 und einen damit korrespondierenden Vorsprung 14 aufweisen. Vorliegend sind sowohl der Vorsprung 14 als auch die Ausnehmung 13 jeweils in einem Übergangsbereich zwischen der Flanke 5a der einen Feder 5 und der Nutwange 4a der an demselben Wandelement 12 ausgebildeten Nut 4 angeordnet.

Wie bereits in Figur 13 dargestellt, unterscheiden sich auch hierbei die Länge l1 und die Tiefe l2 von Feder 5 und Nut 4. Demgegenüber sind die Höhe b3 der Feder 5 und die Breite b2 der Nut 4 identisch.

Selbstverständlich können die jeweiligen Abmessungen Kopplungsmittel 3 sich auch in anderer als hier gezeigter Weise voneinander unterscheiden. So können beispielsweise die Länge l1 und Tiefe l2 von Feder 5 und Nut 4 identisch sein, während die Höhe b3 der Feder 5 sich von der Breite b2 der Nut 4 unterscheidet. Demgegenüber können die Höhe b3 der Feder 5 und die Breite b2 der Nut 4 identisch sein, wohingegen die Länge l1 der Feder 5 und die Tiefe l2 der Nut 4 voneinander unterschiedlich sind.

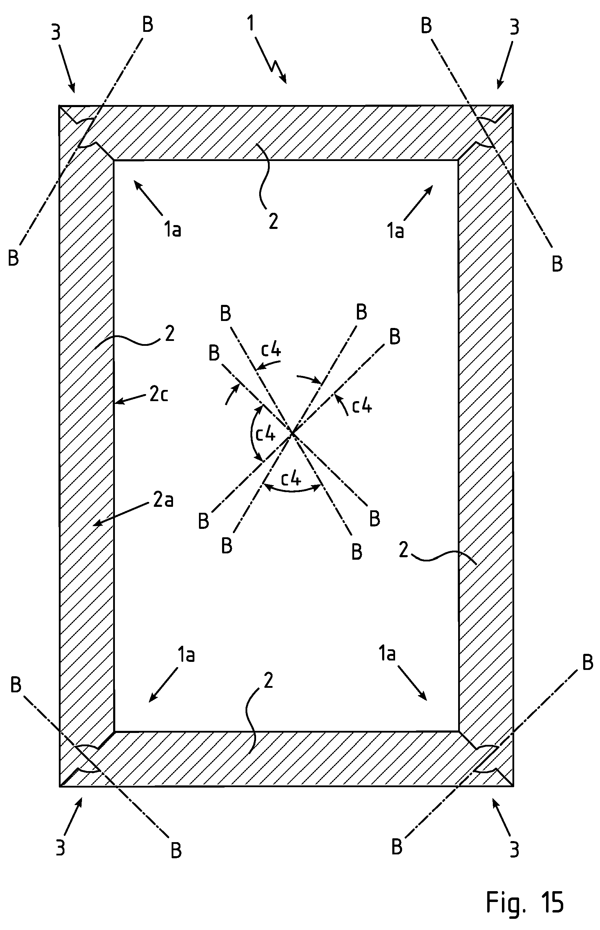

Figur 15 zeigt einen Schnitt durch einen erfindungsgemäßen Korpus 1. Wie bereits in Figur 1 verdeutlicht, ist dieser aus einzelnen Wandelementen 2 gebildet, welche dabei einen in sich geschlossenen Rahmen bilden. Um einen besonders haltbaren Verbund der Wandelemente 2 untereinander zu erhalten, weisen deren in den jeweils unterschiedlichen Eckbereichen la des Korpus 1 gelegenen Kopplungsmittel 3 jeweils einen Winkel zwischen ihren Neigeebenen B auf.

Zur Verdeutlichung sind die jeweiligen Neigeebenen B der in den Eckbereichen la gelegenen Kopplungsmittel 3 parallel in das Zentrum der Darstellung des Korpus 1 in Figur 10 verschoben. Hierbei wird deutlich, dass sämtliche Neigeebenen B jeweils einen Winkel c4 zwischen sich einschließen. Mit anderen Worten verläuft keine Neigeebene B der in den Eckbereichen 1a des Korpus 1 gelegenen Kopplungsmitteln 3 parallel zueinander. Auf dieser Weise bilden auch die sich diagonal gegenüberliegenden Eckbereiche 1a innerhalb des Korpus 1 keine gemeinsame Verschiebeebene ihrer Kopplungsmittel 3, da deren jeweiligen Neigeebenen B gegeneinander geneigt sind.

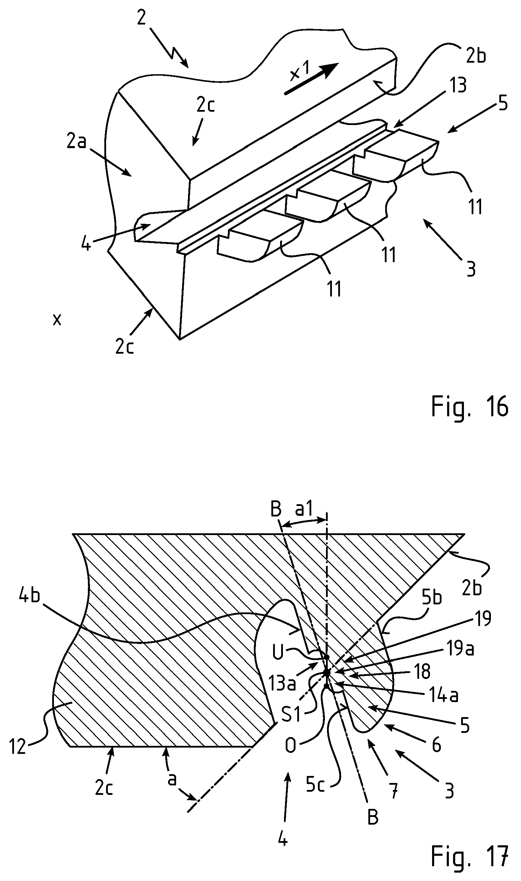

Figur 16 verdeutlicht die bereits zu den Figuren 13 und 14 beschriebene Lage der Ausnehmung 13 in Ebene der Stirnseite 2b eines Wandelements 12. In dieser Ansicht wird deutlich, dass sich die notwendige Aufweitung der Nut 4 zur Aufnahme der mit einerm Vorsprung 14 ausgestalteten Feder 5 nur auf den Bereich der Ebene der Stirnseite 2b beschränken muss, sofern der entsprechende Vorsprung 13 des benachbarten Wandelemnts 12 sich ebenfalls in dieser Ebene befindet.

Figur 17 verdeutlicht eine weitere alternative Ausgestaltung der bereits zuvor aufgezeigten Wandelemente 12. Gegenüber der bereits in Figur 8 dargestellten Anordnung kuppelartiger Vorsprünge 14 an den Federn 5 und daran formangepassten Ausnehmungen 13 in den Nuten 4 sind diese nunmehr deutlich näher zusammengerückt. In Form einer Ausnehmung 13a und eines unmittelbar zu der Ausnehmung 13a benachbart angeordneten Vorsprungs 14a bilden diese eine gemeinsame Verriegelungskontur 18.

Gegenüber den Darstellungen in den Figuren 2 bis 10 ist die Neigeebene B der Kopplungsmittel 3 im Uhrzeigersinn verdreht, so dass die Nut 4 und die Feder 5 eine geringere Neigung gegenüber der Seitenfläche 2c des Wandelements 12 aufweisen. Hierdurch ist insbesondere die Feder 5 mehr in Längsrichtung eines weiteren, hier nicht näher dargestellten zu koppelnden Wandelements 12 ausgerichtet.

Mit Blick auf die Verriegelungskontur 18 wird deutlich, dass deren Ausnehmung 13a und der unmittelbar benachbart zu dieser angeordnete Vorsprung 14a miteinander eine im Querschnitt der Kopplungsmittel 3 gemeinsame S-förmige Kontur bilden. Dabei befindet sich die Ausnehmung 13a der S-förmigen Kontur im Bereich der Nut 4, wohingegen der Vorsprung 14a im Bereich der Feder 5 angeordnet ist. Der Vorsprung 14a weist an seiner höchsten Stelle einen Hochpunkt O auf, während die Ausnehmung 13a einen in ihrem Grund gelegenen Tiefpunkt U besitzt. Zwischen dem Hochpunkt O und dem Tiefpunkt U erstreckt sich ein Übergangsbereich 19, welcher die Ebene der Stirnseite 2b in einem Schnittunkt S1 schneidet.

Der Übergangsbereich 19 weist ferner einen zwischen dem Hochpunkt O und dem Tiefpunkt U gelegenen Flächenabschnitt 19a auf, welcher eben ausgestaltet ist. Dieser ebene Flächenabschnitt 19a und die Neigeebene B der Kopplungsmittel 3 schließen dabei einen Winkel a1 zwischen sich ein. Besagter Winkel a1 entspricht vorliegend etwa der Hälfte des Winkels a der Neigung der Stirnseite 2b gegenüber der Seitenfläche 2c.

Der Vorsprung 14a und die Ausnehmung 13a der Verriegelungskontur 18 werden zu einer Seite hin durch eine ebene Flanke 5c der Feder 5 und zur anderen Seite hin durch eine ebene Nutwange 4b der Nut 4 begrenzt. Im Unterschied zu den bisher aufgezeigten Ausführungen weisen die Nut 4 und die Feder 5 einen Versatz zueinander auf. Dabei erstrecken sich die ebene Flanke 5c der Feder 5 und die ebene Nutwange 4b der Nut 4 in voneinander unterschiedlichen Ebenen, welche gegenüber der Neigeebene B der Kopplungsmittel 3 in unterschiedliche Richtungen verspringen. Hierdurch verlaufen die Nutwange 4b der Nut 4 und die Flanke 5c der Feder 5 nicht entlang der Neigeebene B, sondern in hierzu parallel beabstandeten Ebenen, welche sich auf jeweils gegenüberliegenden Seiten der Neigeebene B befinden.

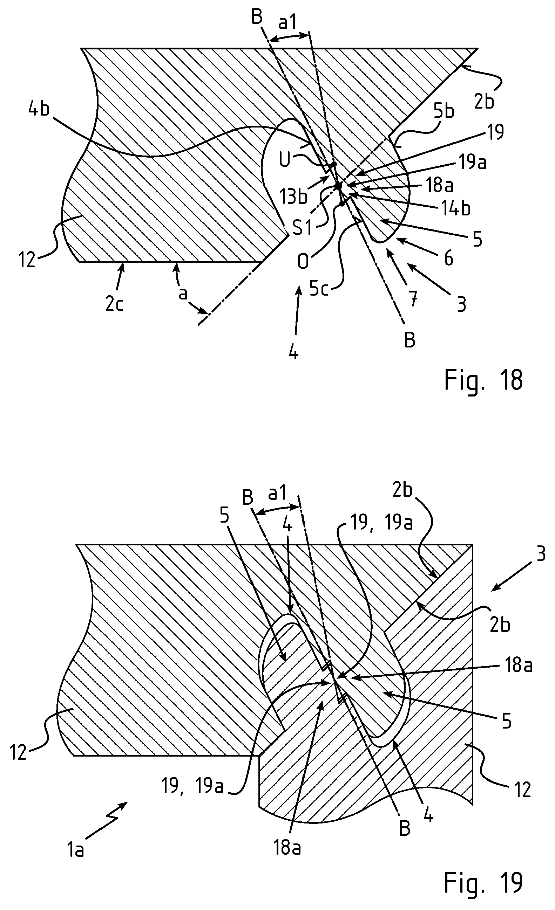

Figur 18 zeigt eine alternative Ausgestaltung zu der in Figur 17 dargestellten Verriegelungskontur 18. Hierbei bilden eine Ausnehmung 13b und ein unmittelbar benachbart zu dieser angeordneter Vorsprung 14b eine Verriegelungskontur 18a, welche eine im Querschnitt der Kopplungsmittel 3 Z-förmige Kontur aufweist. Die Z-förmige Kontur setzt sich aus der dreieckig ausgestalteten Ausnehmung 13b und dem ebenfalls dreieckig ausgestalteten Vorsprung 14b zusammen. Der sich zwischen dem Hochpunkt O und dem Tiefpunkt U der Verriegelungskontur 18a erstreckende ebene Flächenabschnitt 19a nimmt dabei die gesamte Länge des Übergangsbereichs 19 ein.

Figur 19 zeigt das Wandelement 2 aus Figur 18 in einem Eckbereich 1a und somit in einem bereits gekoppelten Zustand mit einem weiteren Wandelement 12. Wie zu erkennen, sind die jeweiligen Nuten 4 und Federn 5 nicht vollständig konturangepasst, so dass insbesondere in der Tiefe der Nuten 4 noch etwas Spiel verbleibt. Demgegenüber liegen die jeweiligen Stirnseiten 2b der Wandelemente 12 aufeinander, um ein möglichst geringes Spaltmaß zwischen ihnen zu erhalten. Die hierfür erforderliche Druckkraft wird durch die ineinander greifenden Verriegelungskonturen 18a erzeugt, deren Übergangsbereiche 19, näherhin deren Flächenabschnitte 19a aneinander gepresst sind. Die Spannung zwischen den Flächenabschnitten 19a resultiert aus deren Neigung im Winkel a1 gegenüber der Neigeebene B der Kopplungsmittel 3. Die somit schräg zu dieser gestellten ebenen Flächenabschnitte 19a verhindern, dass die Kopplungsmittel 3 in Richtung ihrer Neigeebene B voneinander gelöst werden.

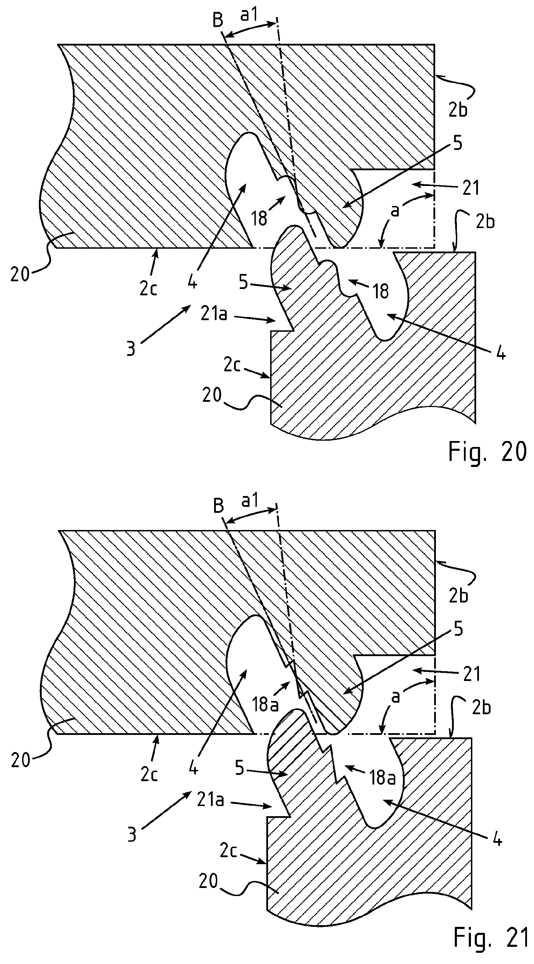

Figur 20 zeigt eine alternative Ausgestaltung zweier miteinander zu verbindender Wandelemente 20. Beide Wandelemente 20 weisen dieselbe S-förmige Verriegelungskontur 18 auf, wie sie bereits aus Figur 17 hervorgeht. Im Unterschied zu den bisherigen Ausgestaltungen weisen die vorliegenden Wandelemente 20 keine in einem Winkel a ungleich 90° gegenüber ihren Seitenflächen 2c geneigte Stirnflächen 2b auf, sondern sind insgesamt rechtwinklig ausgebildet. Dabei schließen die Seitenflächen 2c und die Stirnseiten 2b einen Winkel a von 90° zwischen sich ein.

Um eine Verbindung zwischen den Wandelementen 20 zu ermöglichen, weisen diese ebenfalls im Bereich ihrer Stirnseiten 2b angeordnete Kopplungsmittel 3 auf. Mit Blick auf die Darstellung der Figur 20 sind die Kopplungsmittel 3 des oberen, waagerecht verlaufenden Wandelements 20 im Bereich der Stirnseite 2b in der Seitenfläche 2c ausgebildet. Zwischen der Stirnseite 2b und der Feder 5 dieses Wandelements 20 befindet sich ferner eine Ausklinkung 21, welche dafür vorgesehen ist, einen Teil der Stirnseite 2b des unteren, senkrecht verlaufenden Wandelements 20 aufnehmen zu können.

Um die Kopplung zwischen den Wandelementen 20 zu ermöglichen, weist hierbei auch das untere, senkrecht angeordnete Wandelement 20 eine Ausklinkung 21 a zwischen seiner Feder 5 und seiner Seitenfläche 2c auf. Diese Ausklinkung 21 a ist deutlich kleiner ausgestaltet gegenüber der Ausklinkung 21 des waagerecht dargestellten Wandelements 20.

Figur 21 zeigt die miteinander zu verbindenden Wandelemente 20 der Figur 20 in der Ausgestaltung der Verriegelungskontur 18a, wie sie bereits aus den Figuren 18 und 19 hervorgehen. Somit können die Kopplungsmittel 3 auch in der Variante mit rechtwinklig zueinander angeordneten Seitenflächen 2c und Stirnflächen 2b selbstverständlich auch eine im Querschnitt Z-förmige Kontur aufweisen.

Der Korpus zeichnet sich in einer vorteilhaften Ausgestaltungsvariante der vorliegenden Erfindung dadurch aus, dass wenigstens eines der Kopplungsmittel 3 eine Ausnehmung 13 aufweist, welche mit einem Vorsprung 14 eines anderen Kopplungsmittels 3 korrespondiert, so dass im miteinander verbundenen Zustand der Wandelemente 2, 10, 12 der Vorsprung 14 zumindest bereichsweise in die Ausnehmung 13 greift.

Der Korpus zeichnet sich in einer weiteren erfindungsgemäßen Ausgestaltungsvariante der vorliegenden Erfindung dadurch aus, dass der Vorsprung 14 an der Feder 5 angeordnet ist, während die Ausnehmung 13 in der Nut 4 ausgebildet ist.

Der Korpus zeichnet sich in einer weiteren erfindungsgemäßen Ausgestaltungsvariante der vorliegenden Erfindung dadurch aus, dass die Wandelemente 2, 10, 12 eine jeweils innerhalb des zusammengesetzten Rahmens verlaufende Nut 8 aufweisen, in der eine Rückwand 9 anordenbar ist.

Der Korpus zeichnet sich in einer weiteren erfindungsgemäßen Ausgestaltungsvariante der vorliegenden Erfindung dadurch aus, dass das Keilelement zwischen einer Seitenfläche 2c eines der Wandelemente 2, 10, 12 und der Rückwand 9 anordenbar ist.

Der Korpus zeichnet sich in einer weiteren erfindungsgemäßen Ausgestaltungsvariante der vorliegenden Erfindung dadurch aus, dass das Keilelement eine Rastnase aufweist, welche im angeordneten Zustand des Keilelements zwischen einer Seitenfläche 2c eines der Wandelemente 2, 10, 12 und der Rückwand 9 hinter die Rückwand 9 greift.

Der Korpus zeichnet sich in einer weiteren erfindungsgemäßen Ausgestaltungsvariante der vorliegenden Erfindung dadurch aus, dass die in unterschiedlichen Eckbereichen 1 des geschlossenen Rahmens gelegenen Kopplungsmittel 3 einen Winkel c4 zwischen ihren Neigeebenen B einschließen.

Das Verfahren zum leimlosen Verbinden zeichnet sich in einer weiteren erfindungsgemäßen Ausgestaltungsvariante der vorliegenden Erfindung dadurch aus, dass während der Relativbewegung der Wandelemente 2, 10, 12 zueinander in Verriegelungsrichtung x1 ein jeweils an den Kopplungsmitteln 3 angeordneter Vorsprung 14, 14a in eine ebenfalls an den Kopplungsmitteln 3 angeordnete Ausnehmung 13, 13a greift.

### Bezugszeichen:

- 1 -: Korpus
- 1a -: Eckbereich v. 1
- 2 -: Wandelement v. 1
- 2a -: Randseite v. 2
- 2b -: Stirnseite v. 2
- 2c -: Seitenfläche v. 2
- 3 -: Kopplungsmittel
- 4 -: Nut v. 3
- 4a -: Nutwange v. 4
- 4b -: Nutwange v. 4
- 5 -: Feder v. 3
- 5a -: Flanke v. 5
- 5b -: Flanke v. 5
- 5c -: Flanke v. 5
- 6 -: Fase an 5b
- 7 -: Ende v. 5
- 8 -: Nut in 2
- 9 -: Rückwand
- 10 -: Wandelement v. 1
- 11 -: Federabschnitt
- 12 -: Wandelement v. 1
- 13 -: Ausnehmung in 4
- 13a -: Ausnehmung in 4
- 13b -: Ausnehmung in 4
- 14 -: Vorsprung an 5
- 14a -: Vorsprung an 5
- 14b -: Vorsprung an 5
- 15 -: Hinterschneidung v. 13
- 16 -: Teilbereich v. 14
- 17 -: Keilfläche in 4
- 18 -: Verriegelungskontur
- 18a -: Verriegelungskontur
- 19 -: Übergangsbereich
- 19a -: Flächenabschnitt v. 19
- 20 -: Wandelement v. 1
- 21 -: Ausklinkung
- 21a -: Ausklinkung

- a -: Winkel
- A -: Abstand
- b1 -: Breite v. 4
- b2 -: Breite v. 4
- b3 -: Höhe v. 5
- B -: Neigeebene
- c1 -: Winkel
- c2 -: Winkel
- c3 -: Winkel
- c4 -: Winkel
- l1 -: Länge v. 5
- l2 -: Tiefe v. 4
- O -: Hochpunkt v. 14a
- U -: Tiefpunkt v. 13a

- N -: Normale
- S -: Schnittpunkt zw. 2b u. 5a
- x -: Längsrichtung
- x1 -: Verriegelungsrichtung

## Patentansprüche

1. Leimloser Korpus, insbesondere für ein Möbelstück, umfassend wenigstens drei Wandelemente (2, 10, 12), welche über im Bereich ihrer Stirnseiten (2b) angeordnete Kopplungsmittel (3) miteinander verbindbar sind und dabei einen in sich geschlossenen Rahmen bilden, **dadurch gekennzeichnet, dass** als Kopplungsmittel (3) im Bereich jeder der Stirnseiten (2b) eine Nut (4) und eine Feder (5) angeordnet sind, so dass im verbundenen Zustand der Wandelemente (2, 10, 12) die jeweilige Nut (4) und Feder (5) eines der Wandelemente (2, 10, 12) mit der jeweils anderen Nut (4) und Feder (5) eines der benachbarten Wandelemente (2, 10, 12) miteinander in Eingriff stehen und die Federn (5) sich in eine Längsrichtung (x) der Stirnseiten (2b) erstrecken, wobei die Federn (5) jeweils in einzelne im Abstand (x1) zueinander angeordnete Federabschnitte (11) unterteilt sind, wobei der Abstand (x1) der Federabschnitte (11) untereinander mindestens einer in Längsrichtung (x) gemessenen Länge (x2) der Federabschnitte (11) entspricht und die Nuten (4) jeweils Ausnehmungen (13) aufweisen.

2. Korpus nach Anspruch 1, **dadurch gekennzeichnet, dass** wenigstens eine der Stirnseiten (2b) eines der Wandelemente (2, 10, 12) gegenüber dessen Seitenfläche (2c) in einem Winkel (a) ungleich 90° geneigt ist oder dass wenigstens eine der Stirnseiten (2b) eines der Wandelemente (2, 10, 12) gegenüber dessen Seitenfläche (2c) in einem Winkel (a) von 90° geneigt ist.

3. Korpus nach einem der Ansprüche 1 oder 2, **dadurch gekennzeichnet, dass** die Ausnehmung (13) eine Hinterschneidung (15) aufweist, welche nur im Bereich der Federabschnitte (11) innerhalb der Nuten (4) ausgebildet ist.

4. Korpus nach einem der Ansprüche 1 bis 3, **dadurch gekennzeichnet, dass** die Federn (5) durch gegenüberliegende Flanken (5a, 5b) begrenzt sind, wobei jeweils eine der Flanken (5a) einen ebenen Verlauf aufweist, während die der ebenen Flanke (5a) gegenüberliegende Flanke (5b) eine Fase (6) besitzt.

5. Korpus nach einem der Ansprüche 1 bis 4, **dadurch gekennzeichnet, dass** die Nuten (4) und Federn (5) von sich jeweils zwischen den Stirnseiten (2b) der einzelnen Wandelemente (2, 10, 12) erstreckenden Randseiten (2a) der Wandelemente (2, 10, 12) beabstandet sind.

6. Korpus nach einem der Ansprüche 1 bis 5, **dadurch gekennzeichnet, dass** die Nuten (4) zwischen den Federabschnitten (11) eine Breite (b1) aufweisen, welche eine Breite (b2) der Nuten (4) im Bereich der Federabschnitte (11) übersteigt, wobei die Breite (b1) der Nuten (4) zwischen den Federabschnitten (11) mindestens einer sich aus den Federabschnitten (11) und deren Vorsprüngen (14) zusammensetzenden Höhe entspricht.

7. Korpus nach einem der Ansprüche 4 bis 6, **dadurch gekennzeichnet, dass** die ebenen Flanken (5a) der Federn (5) jeweils in ebene Nutwangen (4a) der Nuten (4) übergehen, wobei die ebenen Flanken (5a) und die ebenen Nutwangen (4a) sich in derselben Ebene erstrecken.

8. Korpus nach einem der Ansprüche 1 bis 7, **dadurch gekennzeichnet, dass** die Nuten (4) und/oder die Federn (5) gegenüber den Stirnseiten (2b) geneigt sind und dabei zwischen ihren jeweiligen Neigeebenen (B) und den Stirnseiten (2b) einen Winkel (c1, c2) ungleich 90° einschließen, insbesondere ist der jeweilige Winkel (c1, c2) zwischen den Neigeebenen (B) und den Stirnseiten (2b) kleiner oder größer dem Winkel (a) der Neigung einer der Stirnseiten (2b) gegenüber der Seitenfläche (2c) des Wandelements (2, 10, 12).

9. Korpus nach Anspruch 8, **dadurch gekennzeichnet, dass** der jeweilige Winkel (c1, c2) zwischen den Neigeebenen (B) und den Stirnseiten (2b) kleiner oder größer dem Doppelten des Winkels (a) der Neigung einer der Stirnseiten (2b) gegenüber der Seitenfläche (2c) des Wandelements (2, 10, 12) ist oder dass der zwischen den Neigeebenen (B) der Kopplungsmittel (3) und den Stirnseiten (2b) eingeschlossene Winkel (c1, c2) kleiner oder größer dem Winkel (a) der Neigung einer der Stirnseiten (2b) gegenüber der Seitenfläche (2c) des Wandelements (2, 10, 12) ist.

10. Korpus nach einem der Ansprüche 1 bis 9, **dadurch gekennzeichnet, dass** die Federabschnitte (11) zweier miteinander verbundener Stirnseiten (2b) gegeneinander geneigt sind, so dass deren Neigeebenen (B) einen Winkel (c3) ungleich 180° zwischen sich einschließen.

11. Korpus nach einem der Ansprüche 1 bis 10, **dadurch gekennzeichnet, dass** die Kopplungsmittel (3) eine Ausnehmung (13a, 13b) aufweisen, welche in einen unmittelbar zu der Ausnehmung (13a, 13b) benachbart angeordneten Vorsprung (14a, 14b) übergeht, wobei die Ausnehmung (13a, 13b) sowie der Vorsprung (14a, 14b) mit einem Vorsprung (14a, 14b) und einer Ausnehmung (13a, 13b) eines anderen Kopplungsmittels (3) korrespondieren, so dass im miteinander verbundenen Zustand der Wandelemente (2, 10, 12) ein Vorsprung (14a, 14b) zumindest bereichsweise in eine Ausnehmung (13a, 13b) greift.

12. Korpus nach Anspruch 11, **dadurch gekennzeichnet, dass** die Ausnehmung (13a) und der unmittelbar benachbart zu dieser angeordnete Vorsprung (14a) miteinander eine im Querschnitt S-förmige Kontur bilden oder dass die Ausnehmung (13b) und der unmittelbar benachbart zu dieser angeordnete Vorsprung (14b) miteinander eine im Querschnitt Z-förmige Kontur bilden.

13. Korpus nach einem der Ansprüche 11 oder 12, **dadurch gekennzeichnet, dass** ein sich zwischen einem Hochpunkt (O) des Vorsprungs (14a, 14b) und einem Tiefpunkt (U) der Ausnehmung (13a, 13b) erstreckender Übergangsbereich (19) die jeweilige Ebene der Stirnseiten (2b) in einem Schnittunkt (S1) schneidet und bevorzugt der Übergangsbereich (19) einen ebenen Flächenabschnitt (19a) aufweist, wobei der Flächenabschnitt (19a) und die Neigeebene (B) der Kopplungsmittel (3) einen Winkel (a1) zwischen sich einschließen.

14. Korpus nach einem der Ansprüche 11 bis 13, **dadurch gekennzeichnet, dass** den Vorsprung (14a) und die Ausnehmung (13a) begrenzende ebene Flanken (5a) der Federn (5) und ebene Nutwangen (4a) der Nuten (4) sich in gegenüber der Neigeebene (B) in unterschiedliche Richtungen verspringenden Ebenen erstrecken.

15. Verfahren zum leimlosen Verbinden wenigstens zweier Wandelemente (2, 10, 12) eines Korpus (1), insbesondere für ein Möbelstück, indem die miteinander zu verbindenden Wandelemente (2, 10, 12) einander angenähert werden, bis deren im Bereich der Stirnseiten (2b) angeordneten Kopplungsmittel (3) in Form von Nuten (4) und Federn (5) ineinander greifen und die Federn (5) sich in eine Längsrichtung (x) der Stirnseiten (2b) erstrecken, wobei die Federn (5) jeweils in einzelne im Abstand (x1) zueinander angeordnete Federabschnitte (11) unterteilt sind, wobei der Abstand (x1) der Federabschnitte (11) untereinander mindestens einer in Längsrichtung (x) gemessenen Länge (x2) der Federabschnitte (11) entspricht und die Nuten (4) jeweils Ausnehmungen (13) aufweisen, wobei die so miteinander in Eingriff stehenden Wandelemente (2, 10, 12) anschließend über eine begrenzte Relativbewegung zueinander in eine parallel zu einer Längsachse (x) der Stirnseiten (2b) verlaufende Verriegelungsrichtung (x1) entgegengesetzt zueinander verlagert werden, um miteinander verbunden zu werden.

## Claims

1. Glueless body, in particular for a piece of furniture, comprising at least three wall elements (2, 10, 12), which can be connected to each other using their coupling means (3) arranged in the area of their front sides (2b), forming a self-contained framework **characterised in that**, as coupling means (3), in the area of each of the front sides (2b), a groove (4) and a spring (5) have been arranged in such a way that, in a connected state of the wall elements (2, 10, 12), the respective groove (4) and spring (5) of one of the wall elements (2, 10, 12) mesh together with the other respective groove (4) and spring (5) of one of the adjacent wall elements (2, 10, 12) and the springs (5) extend in a longitudinal direction (x) of the front sides (2b), whereby the springs (5) are divided into spring sections (11) that are individually spaced apart from each other at a distance (x1), whereby the distance (x1) of the spring sections (11) to each other corresponds to at least one length (x2) of the spring sections (11) measured in a longitudinal direction (x) and the grooves (4) each have recesses (13).

2. Body according to claim 1, **characterised by** in that at least one of the front sides (2b) of one of the wall elements (2, 10, 12) is inclined toward its lateral surface (2c) at an angle (a) that is not equal to 90° or that at least one of the front sides (2b) of one of the wall elements (2, 10, 12) is inclined toward its lateral surface (2c) at an angle (a) of 90°.

3. Body according to one of the claims 1 or 2, **characterised by** the fact that the recess (13) has an undercut (15) that has only been made within the grooves (4) within the area of the spring sections (11).

4. Body according to one of the claims 1 to 3, **characterised in that** the springs (5) are limited by opposing shoulders (5a, 5b), whereby one of the shoulders (5a) is flatly levelled while the shoulders (5b) located opposite to the levelled shoulder (5a) has a bevel (6).

5. Body according to one of the claims 1 to 4, **characterised in that** the grooves (4) and springs (5) are spaced away from each other by the edge sides (2a) of each single wall element (2, 10, 12), which extends between the front sides (2b).

6. Body according to one of the claims 1 to 5, **characterised in that** the grooves (4) have a width (b1) between the spring sections (11) that exceeds a width (b2) of the grooves (4) in the area of the spring sections (11), whereby the width (b1) of the grooves (4) between the spring sections (11) corresponds to at least one height which is comprised of the spring sections (11) and their protrusions (14).

7. Body according to one of the claims 4 to 6, **characterised in that** the levelled shoulders (5a) of the springs (5) merge into levelled surfaces (4a) of the grooves (4) whereby the levelled shoulders (5a) and the levelled groove surfaces (4a) reach across the same level.

8. Body according to one of the claims 1 to 7, **characterised in that** the grooves (4) and/or the springs (5) are inclined toward the front sides (2b), thereby forming an angle (c1, c2) that is not equal to 90° between their respective inclination levels (B) and the front sides (2b), in particular, the respective angle (c1,c2) between the inclination levels (B) and the front sides (2b) is smaller or larger than the angle (a) of the inclination of one of the front sides (2b) toward the lateral surface (2c) of the wall element. (2, 10, 12).

9. Body according to claim 8, **characterised in that** the respective angle (c1,c2) between the inclined levels (B) and the front sides (2b) is smaller or larger than double the angle (a) of the inclination of one of the front sides (2b) toward the lateral surface (2c) of the wall element (2, 10, 12) or that the angle (c1,c2) formed between the inclined levels (B) of the coupling means (3) and the front sides (2b) is smaller or larger than the angle (a) of the inclination of one of the front sides (2b) toward the lateral surface (2c) of the wall element (2, 10, 12).

10. Body according to one of the claims 1 to 9, **characterised in that** the spring sections (11) of two front sides (2b) that are connected to each other are oppositely tilted in such a way that the inclination levels (B) form an angle (c3) between each other that is not equal to 180°.

11. Body according to one of the claims 1 to 10, **characterised in that** the coupling means (3) have a recess (13a, 13b) that merges into a protrusion (14a, 14b) arranged directly adjacent to the recess (13a, 13b) whereby the recess (13a,13b) as well as the protrusion (14a,14b) correspond to a protrusion (14a,14b) and a recess (13a,13b) of another coupling mean (3) in such a way that a protrusion (14a,14b) engages into one recess (13a,13b) when the wall elements (2, 10, 12) are in their connected state.

12. Body according to claim 11, **characterised in that** the recess (13a) and the protrusion (14a) which is arranged directly adjacent thereto form an S-shaped contour in cross-section or that the recess (13b) and the protrusion (14b) which is arranged directly adjacent thereto form a Z-shaped contour in cross-section.

13. Body according to one of the claims 11 or 12, **characterised in that** a transition area (19) which extends between a high point (O) of the protrusion (14a, 14b) and a low point (U) of the recess (13a, 13b) intersects the respective level of the front sides (2b) at an intersection point (S1) and preferably the transition area (19) has a flat section (19a), whereby the flat section (19a) and the inclination level (B) of the coupling means (3) form an angle (a1) between each other.

14. Body according to one of the claims 11 to 13, **characterised in that** levelled edges (5a) of the springs (5) and levelled surfaces (4a) of the grooves (4) which both limit the protrusion (14a) and the recess (13a) extend into levels projecting into various directions against the inclination level (B).

15. Method to connect at least two wall elements (2, 10, 12) of a body (1) without using glue, in particular for a piece of furniture, while the wall elements (2, 10, 12) to be connected are brought near each other until their coupling means (3) in the form of grooves (4) and springs (5) which are arranged in the area of the front sides (2b), engage and the springs (5) extend in a longitudinal direction (x) of the front sides (2b) whereby the springs (5) are each separated into spring sections (11) that are spaced at a distance (x1) to each other whereby the distance (x1) of the spring sections (11) among each other correspond to a length (x2) measured in a longitudinal direction (x) and the grooves (4) each have recesses (13) whereby the wall elements (2, 10, 12) that are engaged with each other are subsequently oppositely shifted toward each other by a limited relative motion in a locking direction (x1) that is parallel to a longitudinal axis (x) of the front sides (2b) in order to connect to each other.

## Revendications

1. Corps sans colle, notamment pour une pièce de meuble, comprenant au moins trois éléments de paroi (2, 10, 12) qui peuvent être assemblés les uns aux autres par l'intermédiaire de moyens d'assemblage (3) agencés dans la zone de leurs côtés frontaux (2b) et qui forment ainsi un cadre fermé sur lui-même, **caractérisé en ce qu'**une rainure (4) et une languette (5) sont agencés comme moyens d'assemblage (3) dans la zone de chacun des côtés frontaux (2b) de telle sorte que, lorsque les éléments de parois (2, 10, 12) sont assemblés, la rainure respective (4) et la languette respective (5) de l'un des éléments de paroi (2, 10, 12) sont en prise avec l'autre rainure respective (4) et l'autre languette respective (5) de l'un des éléments de paroi voisins (2, 10, 12) et **en ce que** les languettes (5) s'étendent dans une direction longitudinale (x) des côtés frontaux (2b), les languettes (5) étant divisées à chaque fois en tronçons de languette individuels (11) agencés à une distance (x1) les uns des autres, la distance (x1) entre les tronçons de languette (11) correspondant au moins à une longueur (x2) des tronçons de languette (11) mesurée dans la direction longitudinale (x) et les rainures (4) comportant à chaque fois des évidements (13).

2. Corps selon la revendication 1, **caractérisé en ce qu'**au moins l'un des côtés frontaux (2b) de l'un des éléments de paroi (2, 10, 12) est incliné d'un angle (a) différent de 90° par rapport à sa surface latérale (2c) ou **en ce qu'**au moins l'un des côtés frontaux (2b) de l'un des éléments de paroi (2, 10, 12) est incliné d'un angle (a) de 90° par rapport à sa surface latérale (2c).

3. Corps selon l'une des revendications 1 ou 2, **caractérisé en ce que** l'évidement (13) comporte une contre-dépouille (15) qui n'est conçue que dans la zone des tronçons de languette (11) à l'intérieur des rainures (4).

4. Corps selon l'une des revendications 1 à 3, **caractérisé en ce que** les languettes (5) sont délimitées par des flancs opposés (5a, 5b), à chaque fois l'un des flancs (5a) ayant une forme plane tandis que le flanc (5b) situé à l'opposé du flanc plan (5a) a un biseau (6).

5. Corps selon l'une des revendications 1 à 4, **caractérisé en ce que** les rainures (4) et les languettes (5) sont à une certaine distance des côtés marginaux (2a) des éléments de paroi (2, 10, 12), lesquels côtés marginaux s'étendent à chaque fois entre les côtés frontaux (2b) des éléments de paroi individuels (2, 10, 12).

6. Corps selon l'une des revendications 1 à 5, **caractérisé en ce que**, entre les tronçons de languette (11), les rainures (4) ont une largeur (b1) qui dépasse une largeur (b2) des rainures (4) dans la zone des tronçons de languette (11), la largeur (b1) des rainures (4) entre les tronçons de languette (11) correspondant au moins à une hauteur composée des tronçons de languette (11) et de leurs parties en saillie (14).

7. Corps selon l'une des revendications 4 à 6, **caractérisé en ce que** les flancs plans (5a) des languettes (5) se transforment à chaque fois en joues de rainure planes (4a) des rainures (4), les flancs plans (5a) et les joues de rainures planes (4a) s'étendant dans le même plan.

8. Corps selon l'une des revendications 1 à 7, **caractérisé en ce que** les rainures (4) et/ou les languettes (5) sont inclinées par rapport aux côtés frontaux (2b) et forment alors un angle (c1, c2) différent de 90° entre leurs plans d'inclinaison respectifs (B) et les côtés frontaux (2b), l'angle respectif (c1, c2) entre les plans d'inclinaison respectifs (B) et les côtés frontaux (2b) étant notamment plus petit ou plus grand que l'angle (a) de l'inclinaison de l'un des côtés frontaux (2b) par rapport à la surface latérale (2c) de l'élément de paroi (2, 10, 12).

9. Corps selon la revendication 8, **caractérisé en ce que** l'angle respectif (c1, c2) entre les plans d'inclinaison (B) et les côtés frontaux (2b) est plus petit ou plus grand que le double de l'angle (a) de l'inclinaison de l'un des côtés frontaux (2b) par rapport à la surface latérale (2c) de l'élément de paroi (2, 10, 12) ou **en ce que** l'angle (c1, c2) formé entre les plans d'inclinaison (B) des moyens d'assemblage (3) et les côtés frontaux (2b) est plus petit ou plus grand que l'angle (a) de l'inclinaison de l'un des côtés frontaux (2b) par rapport à la surface latérale (2c) de l'élément de paroi (2, 10, 12).

10. Corps selon l'une des revendications 1 à 9, **caractérisé en ce que** les tronçons de languette (11) de deux côtés frontaux (2b) assemblés l'un à l'autre sont inclinés les uns par rapport aux autres de telle sorte que leurs plans d'inclinaison (B) forment entre eux un angle (c3) différent de 180°.

11. Corps selon l'une des revendications 1 à 10, **caractérisé en ce que** les moyens d'assemblage (3) comportent un évidement (13a, 13b) qui se transforme en une partie en saillie (14a, 14b) agencée directement au voisinage de l'évidement (13a, 13b), l'évidement (13a, 13b) ainsi que la partie en saillie (14a, 14b) correspondant alors à une partie en saillie (14a, 14b) et à un évidement (13a, 13b) d'un autre moyen d'assemblage (3) de telle sorte que, lorsque les éléments de paroi (2, 10, 12) sont assemblés, une partie en saillie (14a, 14b) pénètre au moins par zones dans un évidement (13a, 13b).

12. Corps selon la revendication 11, **caractérisé en ce que** l'évidement (13a) et la partie en saillie (14a) agencée directement au voisinage de celui-ci forment ensemble un contour ayant une section transversale en forme de S ou **en ce que** l'évidement (13b) et la partie en saillie (14b) agencée directement au voisinage de celui-ci forment ensemble un contour ayant une section transversale en forme de Z.

13. Corps selon l'une des revendications 11 ou 12, **caractérisé en ce qu'**une zone de transition (19) s'étendant entre un point haut (0) de la partie en saillie (14a, 14b) et un point bas (U) de l'évidement (13a, 13b) coupe le plan respectif des côtés frontaux (2b) en un point d'intersection (S1) et **en ce que** la zone de transition (19) comporte de préférence un tronçon de surface plan (19a), le tronçon de surface (19a) et le plan d'inclinaison (B) des moyens d'assemblage (3) formant entre eux un angle (a1).

14. Corps selon l'une des revendications 11 à 13, **caractérisé en ce que** les flancs plans (5a) des languettes (5) et les joues de rainures planes (4a) des rainures (4), qui délimitent la partie en saillie (14a) et l'évidement (13a), s'étendent dans des plans s'écartant dans différentes directions par rapport au plan d'inclinaison (B).

15. Procédé pour l'assemblage sans colle d'au moins deux éléments de paroi (2, 10, 12) d'un corps (1), notamment pour une pièce de meuble, les éléments de paroi (2, 10, 12) à assembler l'un à l'autre étant rapprochés l'un de l'autre jusqu'à ce que leurs moyens d'assemblage (3) agencés dans la zone des côtés frontaux (2b) et réalisés sous forme de rainures (4) et languettes (5) pénètrent les uns dans les autres et les languettes (5) s'étendant dans une direction longitudinale (x) des côtés frontaux (2b), les languettes (5) étant divisées à chaque fois en tronçons de languette individuels (11) agencés à une distance (x1) les uns des autres, la distance (x1) entre les tronçons de languette (11) correspondant au moins à une longueur (x2) des tronçons de languette (11) mesurée dans la direction longitudinale (x) et les rainures (4) comportant à chaque fois des évidements (13), les éléments de paroi (2, 10, 12) ainsi en prise l'un avec l'autre étant ensuite déplacés dans des directions opposées par l'intermédiaire d'un mouvement relatif limité dans une direction de verrouillage (x1) qui s'étend parallèlement à un axe longitudinal (x) des côtés frontaux (2b) pour être assemblés l'un à l'autre.
